(19) Europäisches Patentamt / European Patent Office / Office européen des brevets

(11) **EP 4 675 935 A1**

(12) **EUROPEAN PATENT APPLICATION**
published in accordance with Art. 153(4) EPC

(43) Date of publication:
07.01.2026 Bulletin 2026/02

(51) International Patent Classification (IPC):
*H04B 7/0413* (2017.01)   *H04W 16/28* (2009.01)

(21) Application number: 24774114.3

(22) Date of filing: 19.03.2024

(52) Cooperative Patent Classification (CPC):
H04B 7/0413; H04B 17/309; H04B 17/382;
H04L 5/00; H04W 16/28

(86) International application number:
PCT/CN2024/082482

(87) International publication number:
WO 2024/193549 (26.09.2024 Gazette 2024/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.03.2023 CN 202310311468

(71) Applicant: HUAWEI TECHNOLOGIES CO., LTD.
Shenzhen, Guangdong 518129 (CN)

(72) Inventors:
• LING, Cen
  Shenzhen, Guangdong 518129 (CN)
• QIN, Qibo
  Shenzhen, Guangdong 518129 (CN)
• WANG, Chao
  Shenzhen, Guangdong 518129 (CN)
• CHEN, Shujing
  Shenzhen, Guangdong 518129 (CN)
• PENG, Jinlin
  Shenzhen, Guangdong 518129 (CN)
• JIN, Huangping
  Shenzhen, Guangdong 518129 (CN)

(74) Representative: Körber, Martin Hans
Mitscherlich PartmbB
Patent- und Rechtsanwälte
Karlstraße 7
80333 München (DE)

(54) **COMMUNICATION METHOD AND COMMUNICATION APPARATUS**

(57) A communication method and a communication apparatus are provided. The method includes: sending motion information of a terminal device and sending time information of a first antenna in a first virtual antenna array to a network device; receiving first configuration information from the network device, where the first configuration information is used to configure a first reference signal corresponding to the motion information and the sending time information; sending the first reference signal to the network device based on the first configuration information; and receiving a first multipath angle from the network device, where the first multipath angle indicates a multipath angle at which the first reference signal reaches the network device. The first antenna is any antenna in the first virtual antenna array. According to embodiments of this application, accuracy of multipath angle estimation can be improved, thereby improving communication quality.

FIG. 3

**Description**

This application claims priority to Chinese Patent Application No. 202310311468.1, filed with the China National Intellectual Property Administration on March 22, 2023 and entitled "COMMUNICATION METHOD AND COMMUNICATION APPARATUS", which is incorporated herein by reference in its entirety.

**TECHNICAL FIELD**

Embodiments of this application relate to the field of communication technologies, and in particular, to a communication method and a communication apparatus.

**BACKGROUND**

Demands for wireless network capacities increase exponentially with demands for a plurality of integrated services from voice to multimedia. New radio (new radio, NR) communication in 5th generation mobile communication (5th generation mobile communication, 5G) has developed towards microwave and millimeter-wave frequency bands with richer spectrum resources, such as V-band (V-band) and E-band (E-band). In 5G NR, a multiple-input multiple-output (multiple-input multiple-output, MIMO) technology is usually used to improve communication quality by using a multipath effect. In a MIMO system, a transmitter and a receiver may use a plurality of antennas that can operate simultaneously for communication, and use a complex signal processing technology to significantly enhance reliability, a transmission range, and a throughput. However, the multipath effect causes a problem such as signal fading. In the MIMO technology, multipath propagation needs to be performed usually in a manner such as accurate multipath angle estimation, and a negative factor of the multipath effect is converted into a favorable factor that can improve communication quality. Therefore, how to improve accuracy of multipath angle estimation to ensure communication quality is an urgent problem to be resolved.

**SUMMARY**

Embodiments of this application provide a communication method and a communication apparatus, to improve accuracy of multipath angle estimation, thereby improving communication quality.

According to a first aspect, an embodiment of this application provides a communication method. The method may be performed by a terminal device, or may be performed by an apparatus matching the terminal device, for example, a processor, a chip, or a chip system. The method may include: sending motion information of the terminal device and sending time information of a first antenna in a first virtual antenna array to a network device, where the first antenna is any antenna in the first virtual antenna array; receiving first configuration information from the network device, where the first configuration information is used to configure a first reference signal corresponding to the motion information and the sending time information; sending the first reference signal to the network device based on the first configuration information; and receiving a first multipath angle from the network device, where the first multipath angle indicates a multipath angle at which the first reference signal reaches the network device.

It can be learned that the terminal device may report the motion information and the sending time information of the first antenna to the network device, so that the network device determines the first configuration information corresponding to the motion information and the sending time information of the first antenna. The terminal device sends the first reference signal to the network device based on the first configuration information, so that the first reference signal matches the motion information and the first virtual antenna array to which the first antenna belongs, and the network device can determine, based on the first reference signal, the first multipath angle with high accuracy. The terminal device receives the first multipath angle from the network device, so that communication quality can be improved based on the first multipath angle with high accuracy.

In a possible implementation, the first configuration information is used to configure sending time information of the first reference signal, so that the terminal device sends the first reference signal to the network device based on the sending time information.

Optionally, the sending time information of the first reference signal includes sending time of a 1st reference signal in the first reference signal and a sending periodicity of the first reference signal. Based on this, sending the first reference signal to the network device based on the first configuration information may include: determining a location of a 1st antenna in the first virtual antenna array based on the sending time of the 1st reference signal, where the 1st antenna is configured to send the 1st reference signal; and sending the first reference signal to the network device based on the location of the 1st antenna, the motion information, the sending time of the 1st reference signal, and the sending periodicity.

It can be learned that the terminal device may send the periodic first reference signal to the network device based on the first configuration information, so that the first reference signal matches the motion information and the first virtual antenna array. Based on the sent first reference signal, it is conducive for the network device to determine the first multipath angle with high accuracy based on the first reference signal.

Optionally, the sending time information of the first reference signal includes sending time of a 1st reference signal in the first reference signal, a sending periodicity of the first reference signal, and a time offset. The method for sending the first reference signal to the network device based on the first configuration information may include: determining a location of a 1st antenna in the first virtual antenna array based on the sending time of the 1st reference signal; and when receiving an activation instruction from the network device, sending the first reference signal to the network device based on the location of the 1st antenna, the motion information, the sending time of the 1st reference signal, the sending periodicity, and the time offset.

It can be learned that the terminal device may send the semi-static first reference signal to the network device based on the first configuration information, so that the first reference signal matches the motion information and the first virtual antenna array. Based on the sent first reference signal, it is conducive for the network device to determine the first multipath angle with high accuracy.

Optionally, the sending time information of the first reference signal may include sending time of a 1st reference signal in the first reference signal. Based on this, the method for sending the first reference signal to the network device based on the first configuration information may include: determining a location of each antenna in the first virtual antenna array based on the sending time of the 1st reference signal; and when receiving a trigger instruction from the network device, sending the first reference signal to the network device based on the sending time of the 1st reference signal and the location of each antenna in the first virtual antenna array.

It can be learned that the terminal device may send the aperiodic first reference signal to the network device based on the first configuration information, so that the first reference signal matches the motion information and the first virtual antenna array. Based on the sent first reference signal, it is conducive for the network device to determine the first multipath angle with high accuracy.

In a possible implementation, the method may further include: constructing the first virtual antenna array based on the sent first reference signal.

It can be learned that the terminal device may construct the first virtual antenna array by sending the first reference signal to the network device, so that the network device can determine, based on the first virtual antenna array, the first multipath angle with high accuracy. In addition, communication quality can also be improved based on the first virtual antenna array. For example, diversity reception may be implemented, a total antenna gain is increased, interference is canceled, a communication beam is adjusted to a specific direction, a source direction of an input signal is measured, and a signal to interference plus noise ratio is increased to a maximum extent.

In a possible implementation, the method may further include: sending parameter information of the first virtual antenna array and a movement trajectory type corresponding to the first virtual antenna array to the network device. The movement trajectory type includes one or more of a circular trajectory, a rectangular trajectory, a straight-line trajectory, and an irregular trajectory.

Optionally, if the movement trajectory type includes the circular trajectory, the parameter information of the first virtual antenna array includes a radius of a circle formed by antennas in the first virtual antenna array; or if the movement trajectory type includes the rectangular trajectory, the straight-line trajectory, or the irregular trajectory, the parameter information includes a spacing between antennas in the first virtual antenna array.

It can be learned that different movement trajectory types have parameter information of different first virtual antenna arrays, and the terminal device may construct different first virtual antenna arrays based on different movement trajectory types and corresponding parameter information of the first virtual antenna arrays. The parameter information is reported to the network device, which helps the network device determine the first multipath angle with high accuracy, so that the terminal device can obtain the first multipath angle with high accuracy.

In a possible implementation, the motion information includes one or more of a rotation speed, a translation speed, acceleration information, and motion sensor information of the terminal device.

It can be learned that the terminal device may report the motion information to the network device, so that the network device determines the first configuration information corresponding to the motion information.

In a possible implementation, the method may further include: performing beam management and/or channel estimation based on the first multipath angle.

It can be learned that the terminal device may determine a proper beam through beam management based on the first multipath angle, and perform channel estimation based on the first multipath angle, so that channel estimation accuracy can be improved. According to the method provided in this embodiment of this application, beam management is performed, and the terminal device does not need to perform beam sweeping, so that high power consumption and a high latency caused by a beam sweeping process can be avoided, thereby improving communication quality.

According to a second aspect, an embodiment of this application provides a communication method. The method may be performed by a network device, or may be performed by an apparatus matching the network device, for example, a processor, a chip, or a chip system. The method may include: receiving motion information of a terminal device and sending time information of a first antenna in a first virtual antenna array of the terminal device from the terminal device; sending first configuration information to the terminal device, where the first configuration information is used to configure a first reference signal corresponding to the motion information and the sending time information of the first antenna; receiving the first reference signal from the terminal device; and sending a first multipath angle to the terminal device, where the first multipath angle indicates a multipath angle at which the first reference signal is received. The first antenna is any antenna in the first virtual antenna array.

It can be learned that the network device may configure the first reference signal for the terminal device based on the motion information and the sending time information of the first antenna that are reported by the terminal device, and determine, based on the first reference signal and the first virtual antenna array, the first multipath angle with high accuracy. Communication quality can be improved based on the first multipath angle.

In a possible implementation, the method may further include: receiving parameter information of the first virtual antenna array and a movement trajectory type corresponding to the first virtual antenna array from the terminal device; and determining the first virtual antenna array based on the movement trajectory type, the parameter information of the first virtual antenna array, and the first reference signal, where the movement trajectory type includes one or more of a circular trajectory, a rectangular trajectory, a straight-line trajectory, and an irregular trajectory.

It can be learned that the network device may determine the first virtual antenna array based on the movement trajectory type of the terminal device and the parameter information of the first virtual antenna array, so that the network device can determine the first multipath angle with high accuracy.

Optionally, if the movement trajectory type includes the circular trajectory, the parameter information of the first virtual antenna array may include a radius of a circle formed by all antennas in the first virtual antenna array; or if the movement trajectory type includes the rectangular trajectory, the straight-line trajectory, or the irregular trajectory, the parameter information of the first virtual antenna array may include a spacing between antennas in the first virtual antenna array.

It can be learned that the network device may determine, based on different movement trajectory types and parameter information of different first virtual antenna arrays, accurate information of the first virtual antenna array constructed by the terminal device, to help determine the first multipath angle with high accuracy.

In a possible implementation, the method may further include: determining a steering vector of the first virtual antenna array based on the first virtual antenna array and the parameter information of the first virtual antenna array; performing channel estimation based on the first reference signal, to determine a channel covariance parameter; and determining the first multipath angle based on the channel covariance parameter and the steering vector of the first virtual antenna array.

It can be learned that the network device may determine the first multipath angle of the terminal device based on the first virtual antenna array and the first reference signal, to help improve accuracy of multipath angle estimation.

In a possible implementation, the motion information includes one or more of a rotation speed, a translation speed, acceleration information, and motion sensor information of the terminal device.

It can be learned that the network device may communicate with the terminal device in a motion state based on the motion information reported by the terminal device, and configure, for the terminal device based on the motion information, the first reference signal corresponding to the motion information, to help improve accuracy of multipath angle estimation.

According to a third aspect, an embodiment of this application provides a communication method. The method may be performed by a terminal device, or may be performed by an apparatus matching the terminal device, for example, a processor, a chip, or a chip system. The method may include: sending motion information of the terminal device and sending time information of a first antenna in a first virtual antenna array of the terminal device to a network device; receiving a second reference signal from the network device, where the second reference signal corresponds to the motion information and the sending time information of the first antenna; and sending a second multipath angle to the network device, where the second multipath angle indicates a multipath angle at which the second reference signal is received. The first antenna is any antenna in the first virtual antenna array.

It can be learned that the terminal device may report the motion information and the sending time information of the first antenna to the network device, so that the network device sends the second reference signal corresponding to the motion information and the sending time information of the first antenna to the terminal device, so that the second reference signal matches the motion information and the first virtual antenna array. The terminal device may determine the second multipath angle with high accuracy based on the first virtual antenna array and the second reference signal. Communication quality can be improved based on the second multipath angle.

In a possible implementation, the method further includes: sending parameter information of the first virtual antenna array and a movement trajectory type corresponding to the first virtual antenna array to the network device. The movement trajectory type includes one or more of a circular trajectory, a rectangular trajectory, a straight-line trajectory, and an irregular trajectory.

It can be learned that the terminal device sends the movement trajectory type and the parameter information of the first virtual antenna array to the network device, so that the network device sends a first reference signal corresponding to the first virtual antenna array to the terminal device.

Optionally, if the movement trajectory type includes the circular trajectory, the parameter information of the first virtual antenna array includes a radius of a circle formed by antennas in the first virtual antenna array; or if the movement trajectory type includes the rectangular trajectory, the straight-line trajectory, or the irregular trajectory, the parameter information includes a spacing between antennas in the first virtual antenna array.

It can be learned that the terminal device may construct different first virtual antenna arrays based on different movement trajectory types, to determine the second multipath angle with high accuracy based on the first virtual antenna array. In addition, communication quality can also be improved based on the first virtual antenna array. For example, diversity reception may be implemented, a total antenna gain is increased, interference is canceled, a communication beam is adjusted to a specific direction, a source direction of an input signal is measured, and a signal to interference plus noise ratio is greatly increased.

In a possible implementation, the method further includes: determining a steering vector of the first virtual antenna array based on the first virtual antenna array and the parameter information of the first virtual antenna array; performing channel estimation based on the second reference signal, to determine a channel covariance parameter; and determining the second multipath angle based on the channel covariance parameter and the steering vector of the first virtual antenna array.

It can be learned that the terminal device may determine the second multipath angle with high accuracy based on the first virtual antenna array and the second reference signal.

In a possible implementation, the method may further include: performing beam management and/or channel estimation based on the second multipath angle.

It can be learned that the terminal device may determine a proper beam through beam management based on the second multipath angle, and perform channel estimation based on the second multipath angle, so that channel estimation accuracy can be improved. Beam management is performed based on the second multipath angle, and a beam sweeping process in beam management can be omitted. Therefore, problems such as high power consumption and a high latency caused by the beam sweeping process can be avoided, thereby improving communication quality.

According to a fourth aspect, an embodiment of this application provides a communication method. The method may be performed by a network device, or may be performed by an apparatus matching the network device, for example, a processor, a chip, or a chip system. The method may include: receiving motion information of a terminal device and sending time information of a first antenna in a first virtual antenna array of the terminal device from the terminal device; sending a second reference signal to the terminal device, where the second reference signal is determined based on the motion information and the sending time information of the first antenna; and receiving a second multipath angle from the terminal device, where the second multipath angle indicates a multipath angle at which the second reference signal reaches the terminal device. The first antenna is any antenna in the first virtual antenna array.

It can be learned that the network device may configure, based on the motion information and the sending time information of the first virtual antenna array that are reported by the terminal device, the second reference signal corresponding to the motion information and the sending time information of the first antenna, and send the second reference signal to the terminal device, so that the terminal device determines the second multipath angle with high accuracy based on the second reference signal and the first virtual antenna array.

In a possible implementation, the method may further include: receiving parameter information of the first virtual antenna array and a movement trajectory type corresponding to the first virtual antenna array from the terminal device; and determining the first virtual antenna array based on the movement trajectory type, the parameter information of the first virtual antenna array, and a first reference signal, where the movement trajectory type includes one or more of a circular trajectory, a rectangular trajectory, a straight-line trajectory, and an irregular trajectory.

It can be learned that the network device may determine, based on the movement trajectory type and the parameter information of the first virtual antenna array, the first virtual antenna array constructed by the terminal device, to send, to the terminal device, the second reference signal that matches the first virtual antenna array.

Optionally, if the movement trajectory type includes the circular trajectory, the parameter information of the first virtual antenna array includes a radius of a circle formed by all antennas in the first virtual antenna array; or if the movement trajectory type includes the rectangular trajectory, the straight-line trajectory, or the irregular trajectory, the parameter information of the first virtual antenna array includes a spacing between antennas in the first virtual antenna array.

It can be learned that the network device may determine, based on different movement trajectory types and parameter information of different first virtual antenna arrays, different first virtual antenna arrays constructed by the terminal device, to send the second reference signal that matches the first virtual antenna array.

In a possible implementation, the method further includes: determining sending time information of the second reference signal based on the motion information, the sending time information of the first antenna, and the first virtual antenna array.

Optionally, the sending time information of the second reference signal includes sending time of a 1st reference

signal in the second reference signal and a sending periodicity of the second reference signal. Based on this, sending the second reference signal to the terminal device may include: sending the second reference signal to the terminal device based on the sending time of the 1st reference signal and the sending periodicity.

It can be learned that the network device may send a periodic reference signal to the terminal device, so that the second reference signal matches the motion information and the first virtual antenna array. Based on the sent second reference signal, it is conducive for the network device to determine a first multipath angle with high accuracy.

Optionally, the sending time information of the second reference signal includes sending time of a 1st reference signal in the second reference signal, a sending periodicity of the second reference signal, and a time offset. Based on this, sending the second reference signal to the terminal device may include: determining an activation instruction of the second reference signal based on the sending time of the 1st reference signal, the sending periodicity, and the time offset; and when the activation instruction is obtained, sending the second reference signal to the terminal device.

It can be learned that the network device may send the semi-static reference signal to the terminal device, so that the first reference signal matches the motion information and the first virtual antenna array. Based on the sent first reference signal, it is conducive for the network device to determine the first multipath angle with high accuracy.

Optionally, the sending time information of the second reference signal includes sending time of a 1st reference signal in the second reference signal. Based on this, sending the second reference signal to the terminal device may include: determining a trigger instruction of the second reference signal based on the motion information, the sending time information of the first antenna, the first virtual antenna array, and the sending time of the 1st reference signal; and when the trigger instruction is obtained, sending the second reference signal to the terminal device.

It can be learned that the network device may send an aperiodic reference signal to the terminal device, so that the first reference signal matches the motion information and the first virtual antenna array. Based on the sent first reference signal, it is conducive for the network device to determine the first multipath angle with high accuracy.

In a possible implementation, the motion information includes one or more of a rotation speed, a translation speed, acceleration information, and motion sensor information of the terminal device.

It can be learned that the network device may send, to the terminal device based on the motion information, the second reference signal corresponding to the motion information, so that the terminal device determines the accurate second multipath angle based on the second reference signal.

According to a fifth aspect, an embodiment of this application provides a communication apparatus. The communication apparatus includes a module/unit configured to perform the method according to any one of the first aspect and the possible implementations of the first aspect, or a module/unit configured to perform the method according to any one of the third aspect and the possible implementations of the third aspect.

According to a sixth aspect, an embodiment of this application provides a communication apparatus. The communication apparatus includes a module/unit configured to perform the method according to any one of the second aspect and the possible implementations of the second aspect, or a module/unit configured to perform the method according to any one of the fourth aspect and the possible implementations of the fourth aspect.

According to a seventh aspect, an embodiment of this application provides a communication apparatus. The apparatus may be a terminal device, or may be a chip, a chip system, a processor, or the like that supports the terminal device in implementing the foregoing method, or may be a logical node, a logical module, or software that can implement all or some functions of the terminal. The communication apparatus may alternatively be a chip system. The communication apparatus may perform the method according to the first aspect, and/or perform the method according to the third aspect. A function of the communication apparatus may be implemented by hardware, or may be implemented by hardware executing corresponding software. The hardware or the software includes one or more units corresponding to the function. The unit may be software and/or hardware. For an operation performed by the communication apparatus and beneficial effects, refer to the method and beneficial effects according to the first aspect and/or the method and beneficial effects according to the third aspect. Details are not described again.

According to an eighth aspect, an embodiment of this application provides a communication apparatus. The apparatus may be a network device, or may be a chip, a chip system, a processor, or the like that supports the network device in implementing the foregoing method, or may be a logical node, a logical module, or software that can implement all or some functions of the network device. The communication apparatus may alternatively be a chip system. The communication apparatus may perform the method according to the second aspect, and/or perform the method according to the fourth aspect. A function of the communication apparatus may be implemented by hardware, or may be implemented by hardware executing corresponding software. The hardware or the software includes one or more units corresponding to the function. The unit may be software and/or hardware. For an operation performed by the communication apparatus and beneficial effects, refer to the method and beneficial effects according to the second aspect and/or the method and beneficial effects according to the fourth aspect. Details are not described again.

According to a ninth aspect, an embodiment of this application provides a computer-readable storage medium. The computer-readable storage medium stores a computer program, the computer program includes program instructions, and when the program instructions are run on a communication device, the method performed by the terminal device in the method according to the first aspect or the third aspect is implemented, or the method performed by the network device in the method according to the second aspect or the fourth aspect is implemented.

According to a tenth aspect, an embodiment of this application provides a computer program product. When a computer program is executed, the method performed by the terminal device in the method according to the first aspect or the third aspect is implemented, or the method performed by the network device in the method according to the second aspect or the fourth aspect is implemented.

According to an eleventh aspect, an embodiment of this application provides a communication system, including a communication apparatus (such as a terminal device) configured to perform the method according to the first aspect and a communication apparatus (such as a network device) configured to perform the method according to the second aspect; or including a communication apparatus (such as a terminal device) configured to perform the method according to the third aspect and a communication apparatus (such as a network device) configured to perform the method according to the fourth aspect.

## BRIEF DESCRIPTION OF DRAWINGS

FIG. 1 is a diagram of a structure of a communication system according to an embodiment of this application;
FIG. 2 is a diagram of downlink beam management according to an embodiment of this application;
FIG. 3 is a schematic flowchart of a communication method according to an embodiment of this application;
FIG. 4 is a diagram of arrangement of a virtual antenna array according to an embodiment of this application;
FIG. 5A to FIG. 5D are diagrams of four types of virtual antenna arrays according to an embodiment of this application;
FIG. 6 is a schematic flowchart of another communication method according to an embodiment of this application;
FIG. 7 is a diagram of a structure of a communication apparatus according to an embodiment of this application; and
FIG. 8 is a diagram of a structure of another communication apparatus according to an embodiment of this application.

## DESCRIPTION OF EMBODIMENTS

The following describes embodiments of this application with reference to the accompanying drawings in embodiments of this application.

In the specification, claims, and accompanying drawings of this application, the terms "first", "second", "third", "fourth" and the like are intended to distinguish between different objects but do not indicate a particular order. In addition, the terms "include", "have", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

In this application, "sending information to ... (for example, a terminal device)" may be understood as that a destination of the information is the terminal device, and may include directly or indirectly sending the information to the terminal device. "Receiving information from ... (for example, a terminal device)" or "receiving information of ... (for example, a terminal device)" may be understood as that a source of the information is the terminal device, and may include directly or indirectly receiving the information from the terminal device. Information may be necessarily processed between the source for sending the information and the destination, for example, a format change. However, the destination may understand valid information from the source. Similar descriptions in this application may be understood similarly, and details are not described herein.

To better understand embodiments of this application, the following first describes a system architecture in embodiments of this application.

Embodiments of this application may be applied to a wireless communication system such as a long term evolution (long term evolution, LTE) system, a 5th generation mobile communication (5th generation mobile communication, 5G) system, a communication system evolved after 5G, for example, a 6th generation mobile communication (6th generation mobile communication, 6G) system, a satellite communication system, or a short-range communication system. The wireless communication system mentioned in embodiments of this application includes but is not limited to three application scenarios of the 5G/6G mobile communication system: enhanced mobile broadband (enhanced mobile broadband, eMBB), ultra-reliable and low-latency communication (ultra reliable low latency communication, URLLC), massive machine type communication (massive machine type communication, mMTC), a long-range internet of things (long range, LoRa) system, or an internet of vehicles system. The wireless communication system may include one or more network devices and one or more terminal devices.

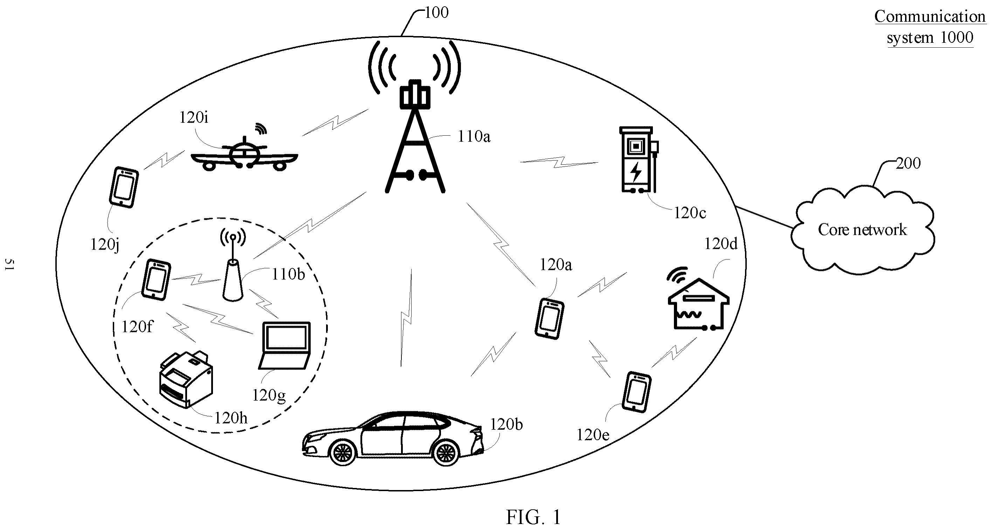

The following uses a system architecture shown in FIG. 1 as an example for description. A communication system 1000 includes a radio access network (radio access network, RAN) 100 and a core network (core network, CN) 200. The RAN 100 includes at least one network device (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

It should be noted that the RAN 100 may be a cellular system related to the 3rd generation partnership project (3rd generation partnership project, 3GPP), for example, a 4G mobile communication system, a 5G mobile communication system, or a system evolved after 5G (for example, a 6G mobile communication system). The RAN 100 may alternatively be an open access network (open RAN, O-RAN, or ORAN), a cloud radio access network (cloud radio access network, CRAN), or the like. The RAN 100 may alternatively be a communication system that integrates the foregoing two or more systems. It should be noted that quantities of network devices and terminal devices in FIG. 1 are merely examples, and should not be considered as a specific limitation on this application. The following describes in detail the terminal device and the network device that are related to the system architecture.

1. Terminal device

The terminal device may also be referred to as user equipment (user equipment, UE), a mobile station (mobile station, MS), a mobile terminal (mobile terminal, MT), or the like, or is a device that is configured to provide voice or data connectivity for a user, or may be an internet of things device. For example, the terminal device includes a handheld device, a vehicle-mounted device, or the like that has a wireless connection function. Currently, the terminal device may be: a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication.

A device form of the terminal is not limited in embodiments of this application. An apparatus configured to implement a function of the terminal device may be a terminal device, or may be an apparatus that can support the terminal device in implementing the function, for example, a chip system. The apparatus may be mounted in the terminal device or used with the terminal device. In embodiments of this application, the chip system may include a chip, or may include a chip and another discrete component.

2. Network device

The network device is a node in a radio access network (radio access network, RAN), and may also be referred to as an access network device, or may also be referred to as a RAN node (or device). The network device is configured to help the terminal device implement wireless access. A plurality of network devices 110 in the communication system 1000 may be nodes of a same type, or may be nodes of different types. In some scenarios, roles of the network device 110 and the terminal device 120 are relative. For example, the network element 120i in FIG. 1 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. The network device 110 and the terminal device 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the network device may be a base station (base station), an evolved NodeB (evolved NodeB, eNodeB), a transmission reception point (transmission reception point, TRP), a transmission point (transmission point, TP), a next generation NodeB (next generation NodeB, gNB), a next generation base station in a 6th generation (6th generation, 6G) mobile communication system, a base station in a future mobile communication system, a satellite, an integrated access and backhaul (integrated access and backhaul, IAB) node, or an access network device in a mobile switching center-based non-terrestrial communication network (non-terrestrial network, NTN) communication system, that is, the network device may be deployed on a high-altitude platform, a satellite, or the like. The access network device may be a macro base station (for example, 110a in FIG. 1), a micro base station or an indoor station (for example, 110b in FIG. 1), a relay node or a donor node, or a radio controller in a CRAN scenario. Alternatively, the access network device may be a device that functions as a base station in device-to-device (device-to-device, D2D) communication, internet of vehicles communication, uncrewed aerial vehicle communication, or machine-to-machine communication. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU).

All or some functions of the network device in this application may alternatively be implemented through a software function running on hardware, or implemented through a virtualized function instantiated on a platform (for example, a cloud platform). Alternatively, the network device in this application may be a logical node, a logical module, or software that can implement all or some functions of the access network device.

In another possible scenario, a plurality of network devices collaborate to assist the terminal device in implementing wireless access, and different network devices separately implement some functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but persons skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the network device is not limited. An apparatus configured to implement a function of the network device may be the network device, or may be an apparatus that can support the network device in implementing the function, for example, a chip system. The apparatus may be mounted in the network device or used with the network device.

For ease of understanding content of the solutions, the following further explains and describes some terms in embodiments of this application, to facilitate understanding by persons skilled in the art. This part is merely for ease of understanding, and cannot be considered as a specific limitation on this application.

1. Multipath propagation (multipath propagation)

Multipath propagation means a propagation phenomenon of a signal from a transmit antenna to a receive antenna through a plurality of paths. Multipath propagation is caused by scattering of electromagnetic waves by the atmosphere, reflection and refraction of electromagnetic waves by the ionosphere, and reflection of electromagnetic waves by ground surface objects such as mountains and buildings.

(1) A multipath effect (multipath effect) means that after a signal is propagated through different paths, component fields reach a receiver at different time and are superimposed based on respective phases, causing interference, and consequently the original signal is distorted or an error occurs. For example, the multipath effect causes fading and phase shift of the signal.

(2) A multipath angle is a direction of arrival (direction of arrival, DoA) of each component of a signal sent from a transmitter to a receiver through different paths for propagation. The multipath angle of the signal is estimated to adjust a parameter related to current signal transmission or reception, so that impact of the multipath effect on communication quality can be weakened to some extent.

2. New radio (new radio, NR)

NR is a wireless access technology based on a 5th generation mobile communication system (5th generation mobile networks, 5G). 5G NR is a global 5G standard with a new air interface design based on an orthogonal frequency division multiplexing (orthogonal frequency division multiplexing, OFDM) technology, and is also an important basis for a next-generation cellular mobile technology. 5G NR can implement parallel transmission of high-speed serial data and support multi-user access.

5G NR defines two frequency band ranges: a frequency range (frequency range, FR) 1 and an FR2. FR1 indicates a low frequency band, and a frequency band range includes 410 MHz to 7125 MHz. FR2 indicates a millimeter-wave high frequency band, and a frequency band range includes 410 MHz to 7125 MHz.

3. Multiple-input multiple-output (multiple-input multiple-output, MIMO)

MIMO means that a plurality of antennas are used at each of a transmitter and a receiver to form an antenna system of a plurality of channels between the transmitter and the receiver, so that signals are transmitted and received through the plurality of antennas at the transmitter and the receiver, thereby improving communication quality. In addition, spatial resources can be fully used, and multiple-input multiple-output is implemented through the plurality of antennas, so that a system channel capacity can be exponentially increased without increasing spectrum resources and an antenna transmit power. Massive multiple-input multiple-output (massive multiple-input multiple-output, massive MIMO) is one of key technologies in 5G communication. Compared with common MIMO, massive MIMO uses larger-scale antennas, for example, 32 antennas, 64 antennas, and 128 antennas.

1. Antenna array

An antenna system of a plurality of channels may be formed by using an antenna array at the transmitter or the receiver, to implement MIMO. The antenna array is an antenna set that includes at least two antennas that are regularly or randomly arranged (disposed or distributed). Each antenna in the antenna array may be referred to as an antenna element, and is configured to receive or send a signal.

In this application, the antenna array may be an antenna set including physical antennas, or may be a virtual antenna array. The virtual antenna array is a virtual antenna array obtained by extending an original array aperture or increasing a quantity of antenna elements by using a specific technical means (for example, constructing a specific array structure model, processing a received signal source by using a mathematical method, or performing virtual transformation on an array). In an implementation, the terminal device or the network device may construct the virtual antenna array in a manner of continuously sending a reference signal in a movement process.

2. Beamforming (beamforming)

Beamforming may also be referred to as beam forming, and is an important component in MIMO. Signal processing at the receiver may be performing weighted combination on signals received by a plurality of antenna elements, to form a desired ideal signal. From a perspective of an antenna pattern (pattern), it is equivalent to describing that a beam in a specified direction is formed. For example, an original omnidirectional reception pattern is converted into a lobed pattern with a null and a strongest direction. A same principle is also applicable to the transmitter. An amplitude and a phase of the antenna element for feeding may be adjusted to form a pattern of a desired shape. Based on a beamforming technology, a plurality of signals may be combined to suppress an interference signal in a non-target direction and enhance a signal in a target direction, thereby increasing a network transmission rate, coverage, and performance.

In 5G high frequency communication, both a base station side and a user side send and receive a signal in a form of beamforming. Because a millimeter-wave frequency band uses a very high frequency, a propagation loss and another loss are caused. To compensate for the losses, directional communication at this frequency is indispensable. 5G NR uses an antenna array with a large quantity of antenna elements with a small wavelength, that is, massive MIMO. Large-scale antennas provide a beamforming gain for a radio frequency link budget, help compensate for the propagation loss, and large-scale antenna arrays help achieve a higher data rate due to a spatial multiplexing technology.

However, in massive MIMO, a beam aligned with each user is required to be finer and more accurate. This requires accurate alignment of transmit and receive beams of a transmission link between a base station and a terminal device of the user. Beam management (beam management) is introduced in 5G NR to achieve beam pair alignment and have required end-to-end performance and a required latency.

3. Beam management

Beam management means that a beam with a specific direction and a specific frequency is dynamically selected for communication between each terminal device and a base station based on channel quality. A beam management process mainly includes two processes: beam training and beam recovery. A beamforming initial access process is referred to as beam training, and beamforming during data transmission is referred to as beam tracking. When the terminal device moves or rotates, or a beam is blocked, beam tracking needs to be performed. When beam quality deteriorates in a data transmission process, beam recovery needs to be performed.

(1) Beam training

In beam training, a massive MIMO channel is detected by using a simulated transmit beam and a simulated receive beam, to search for a transmit-receive beam combination with maximum received signal energy, that is, a beam pair (beam pair link, BPL) that is most suitable for transmission of the channel, to avoid direct estimation of a large-dimensional air interface channel.

Beam training includes main processes such as beam determining, beam measurement, beam sweeping, and beam reporting. Beam determining means a process in which the network device or the terminal device selects a proper transmit beam and a proper receive beam. Beam measurement means that the receiver measures a received beamformed signal. Beam sweeping means that in a spatial area, beams are transmitted and/or received within a specific time interval in a preset manner. The terminal device or the network device may sweep the beam within specific time, to obtain a beam sweeping result. Beam reporting means that the terminal device reports information about the beamformed signal to the network device based on beam measurement. The terminal device may report corresponding measurement information based on a requirement of the network device, and perform a corresponding action after obtaining a response, for example, determine an uplink beam.

The following further describes a main procedure of beam management by using downlink beam management of a millimeter wave as an example.

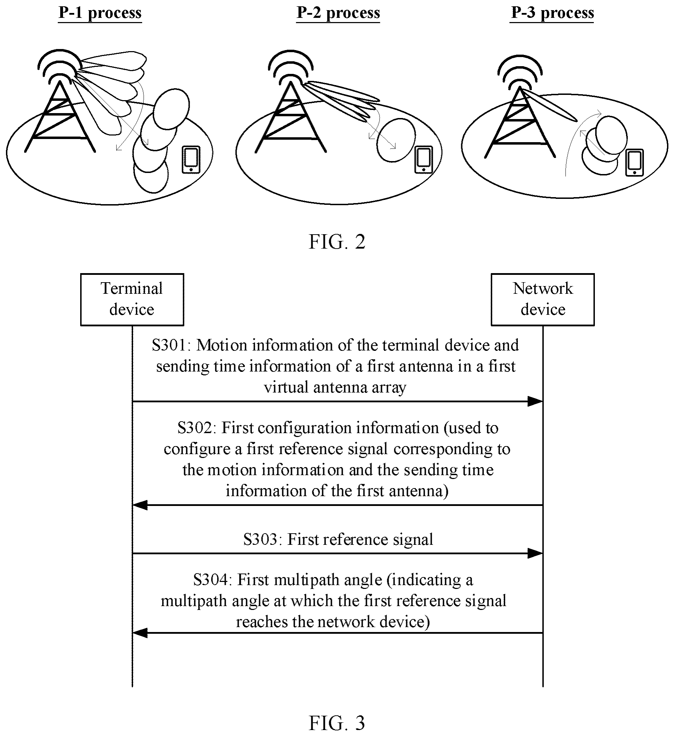

FIG. 2 is a diagram of downlink beam management according to an embodiment of this application. A beam management-related protocol stack entity includes a beam management measurement configuration of a radio resource control (radio resource control, RRC) layer, beam measurement of a physical (physical layer, PHY) layer, measurement reporting, beam determining, and the like. As shown in FIG. 2, a downlink beam management process includes a P-1 process, a P-2 process, and a P-3 process.

(1) The P-1 process may be referred to as a coarse alignment process. In this process, a network device and a terminal device may separately sweep a beam, and generate a coarse beam of a receiver and a coarse beam of a transmitter, to determine a beam pair (BPL). The terminal device measures different transmit beams of the network device, to support selection of a transmit beam of the network device and a receive beam of the terminal device. In the P-1 process, a cell-specific reference signal (cell-specific reference signal), such as a synchronization signal block (synchronization signaling block, SSB) signal, is usually used as a reference signal for this phase.

(2) In the P-2 process, a beam of the network device is refined based on the P-1 process. The terminal device measures a fine beam of the network device by using the selected coarse beam, to find an optimal transmit beam of the network device. In this process, a pilot signal of downlink control information (channel state information-reference signal, CSI-RS) or an SSB may be used as a reference signal. In a higher-layer measurement configuration of a base station and/or the terminal device, repetition (repetition) in a resource set (resource set) may be set to "off", to indicate to perform the P-2 process.

(3) The P-3 process is a fine beam sweeping process of the terminal device. The terminal device measures a same transmit beam (the optimal transmit beam determined in the P-2 process) from the network device, to adjust the receive beam of the terminal device.

A wide beam of the network device and a wide beam of the terminal device may be determined based on the P-1 process, a narrow beam of the network device may be determined based on the P-2 process, and a narrow beam of the terminal device may be determined based on the P-3 process. Currently, a beam sweeping solution is usually implemented by performing level-by-level sweeping, that is, first determining the wide beam of the network device and the wide beam of the terminal device, and then determining the narrow beam of the network device and the narrow beam of the terminal device.

Sweeping time consumed by beam sweeping is related to a periodicity of the reference signal, a form of the terminal device, a form of an antenna, a quantity of panels, and the like. The reference signal may include a signal such as an SSB, a CSI-RS, or an SRS. The form of the terminal device may include a quantity of antennas of the terminal device, a distribution manner of an array formed by a plurality of antennas of the terminal device, and the like. The form of the antenna may include a quantity of polarizations of each antenna, for example, a single polarization or a plurality of polarizations.

For example, it is assumed that the network device has 15 wide beams in total, and each wide beam has 10 narrow beams. The terminal device first finds several beams from a total set of 256 beams, performs global coarse sweeping to obtain seven wide beams, then tracks seven narrow beams in a neighborhood, and selects globally optimal narrow beams, to indicate that all wide beams and narrow beams are swept. In this case, the P-1 process requires $15 \times 7$, namely, a total of 105 sweeps; the P-2 process requires 10 sweeps; and the P-3 process requires 7 sweeps, so that a total of 122 sweeps are required. If the network device includes one TRP, the terminal device includes one antenna panel (panel), and the antenna is single-polarized, 122 sweeps need to be performed. If there are a plurality of TRPs and a plurality of panels, and the antenna is dual-polarized, $122 \times$ a quantity of TRPs $\times$ a quantity of panels $\times$ a quantity of polarizations, namely, about 1000 beam sweeps need to be performed, to determine a proper BPL.

(2) Beam recovery

Beam recovery is intended to help the network device or the terminal adjust a current faulty beam to another available beam based on a beam measurement result, to avoid frequent radio link failures caused by beam misalignment. A beam recovery process includes four processes: beam failure detection, determining of a new candidate beam, beam failure recovery request transmission, and receiving of a beam failure recovery request response by the terminal device.

Determining of the new candidate beam means that in a data transmission process, a reference signal of the terminal device is used to search for a new candidate beam. The new candidate beam may be selected from a previously reported beam group, or may be searched for near an original beam. If no candidate beam can be found in a time window, cell selection and a random access procedure need to be started.

This application provides a communication method, to improve accuracy of multipath angle estimation, thereby improving communication quality.

The following describes the communication method provided in embodiments of this application by using an example in which a terminal device is in a motion state. The motion state in this application means that a location of a network device or the terminal device changes. For example, if the location of the terminal device changes with movement of a head/hand of a person, but a location of the person does not change, it may also be considered that the terminal device is in the motion state.

FIG. 3 is a schematic flowchart of a communication method according to an embodiment of this application. As shown in FIG. 3, the communication method includes but is not limited to the following steps.

S301: A terminal device sends motion information of the terminal device and sending time information of a first antenna in a first virtual antenna array of the terminal device to a network device. Correspondingly, the network device receives the motion information and the sending time information of the first antenna from the terminal device.

The first antenna is any antenna in the first virtual antenna array. The terminal device may form a virtual antenna array by sending a signal or data in a motion process. The terminal device may form a plurality of different virtual antenna arrays, and the first virtual antenna array may be any one of the virtual antenna arrays. The first virtual antenna array is formed by a plurality of antennas, and the first antenna may be any antenna in the first virtual antenna array. The sending time information of the first antenna may include a sending timestamp used by the first antenna to send data such as the motion information of the terminal to the network device. In the first virtual antenna array, sending time information of a remaining antenna may be deduced based on sending time information of one antenna and the motion information of the terminal device.

The motion information of the terminal device may include a rotation speed, a translation speed, acceleration information, and motion sensor information of the terminal device. A motion sensor is an apparatus for detecting motion of the terminal device or a person, and includes gravity, linear acceleration, a rotation vector, a vibration frequency, and the like. The motion sensor may be configured to monitor device movement, such as tilting, shaking, rotating, or swinging. Optionally, the motion information of the terminal device may be determined by using a sensor in the terminal device. For example, speed information such as the rotation speed and the translation speed of the terminal device may be determined by using a speed sensor; the acceleration information of the terminal device may be determined by using an accelerometer; and information such as a rotation vector and a vibration frequency of the terminal device may be determined by using motion sensor information. Optionally, the terminal device may report the motion information of the terminal device to the network device in real time, so that the network device learns of a motion state of the terminal device in real time, to configure a proper reference signal for the terminal device.

In a possible implementation, the terminal device may send parameter information of the first virtual antenna array and a movement trajectory type corresponding to the first virtual antenna array to the network device. The movement trajectory type of the terminal device includes one or more of a circular trajectory, a rectangular trajectory, a straight-line trajectory, and an irregular trajectory. The movement trajectory type is determined by the terminal device based on the sensor in the terminal device, for example, a movement trajectory type of the terminal device within specific time may be obtained by using the motion sensor or a GPS. The parameter information of the first virtual antenna array may include parameters such as an arrangement manner of antennas in the first virtual antenna array and a spacing between antennas.

Optionally, the movement trajectory type may be reported to the network device together with the motion information and the sending time information of the first antenna. Optionally, if the movement trajectory type of the terminal device changes within short time, for example, changes from an initial straight-line trajectory to an irregular trajectory, the terminal device may re-report a current movement trajectory type to the network device after the change.

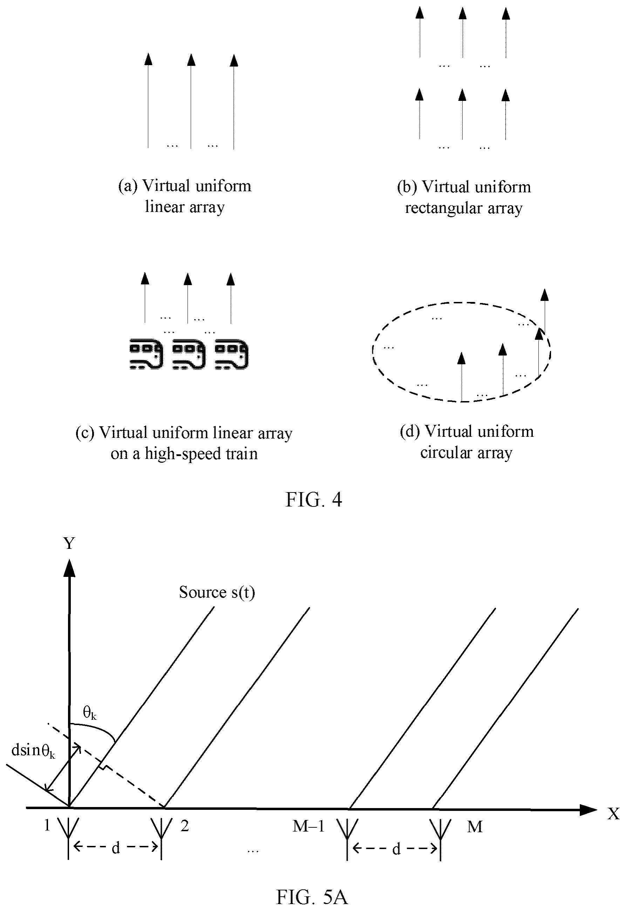

For example, refer to a diagram of arrangement of a virtual antenna array shown in FIG. 4. As shown in (a) in FIG. 4, if the terminal device has a straight-line trajectory, and an antenna in the terminal device is a single antenna, the moving single antenna may form a virtual antenna array of a virtual uniform linear array type. For example, a virtual antenna array of a virtual uniform linear array type shown in (b) in FIG. 4 may be formed based on a single antenna on a running high-speed train. As shown in (c) in FIG. 4, if a movement trajectory of the terminal device is a rectangular trajectory, and an antenna is a vertical antenna, a virtual antenna array of a virtual uniform rectangular array type may be formed. As shown in (d) in FIG. 4, if an antenna on the terminal device is an antenna configured on a wheel that rotates, for example, a vehicle wheel, a movement trajectory type of the terminal device may be a circular trajectory based on movement of the terminal device, and the terminal device may form a virtual antenna array of a virtual uniform circular array type.

It should be noted that the movement trajectory type of the terminal device shown in FIG. 4 and the type of the virtual antenna array corresponding to the movement trajectory type are merely examples, and should not be considered as a specific limitation on this application. Optionally, the movement trajectory type of the terminal device may further include another type. Correspondingly, the type of the virtual antenna array constructed by the terminal device may further include another type. This is not limited in this application. For example, if two antennas on the terminal device are antennas configured on wheels that rotate, for example, vehicle wheels, and the two antennas may rotate with movement of the terminal device at the same time, a movement trajectory of the terminal device may be an annular trajectory, and the terminal device may form a virtual antenna array of a virtual uniform annular array type.

In a possible implementation, if the movement trajectory type includes the circular trajectory, the parameter information of the first virtual antenna array may include a radius of a circle formed by antennas in the first virtual antenna array. If the movement trajectory type includes the rectangular trajectory, the straight-line trajectory, or the irregular trajectory, the parameter information of the first virtual antenna array includes a spacing between antennas in the first virtual antenna array.

For example, when the movement trajectory type includes the rectangular trajectory, the parameter information may include a vertical spacing and a horizontal spacing between antennas in the first virtual antenna array. When the movement trajectory type includes the straight-line trajectory, the parameter information may include a spacing between antennas in the first virtual antenna array. When the movement trajectory type includes the circular trajectory, the parameter information may include a radius of a circle formed by antennas in the first virtual antenna array.

In a possible implementation, the terminal device may send an antenna parameter of the terminal device to the network device. The antenna parameter is a performance parameter of an antenna, such as an input impedance, an antenna pattern, a main lobe width, a side lobe level, a beam direction, a polarization manner, and an antenna gain.

S302: The network device sends first configuration information to the terminal device, where the first configuration information is used to configure a first reference signal corresponding to the motion information and the sending time information of the first antenna. Correspondingly, the terminal device receives the first configuration information from the network device.

The network device may determine the first configuration information based on the motion information of the terminal device and the sending time information of the first antenna in the first virtual antenna array, so that the terminal device may determine the first reference signal based on the first configuration information.

In a possible implementation, the first configuration information is used to configure sending time information of the first reference signal. The sending time information of the first reference signal may include information such as sending time of a $1^{st}$ reference signal in the first reference signal, and/or a sending periodicity of the first reference signal, and/or a time offset.

Optionally, the network device may configure a periodic first reference signal. In this case, the first configuration information may include the sending periodicity of the first reference signal and the sending time of the $1^{st}$ reference signal in the first reference signal. Based on this, the terminal device may determine a location of the terminal device at the sending time of the 1st reference signal as a location of a 1st antenna in the first virtual antenna array. The 1st antenna is configured to send the 1st reference signal. Optionally, the first reference signal may be a periodic SRS signal.

Optionally, the network device may configure a semi-static first reference signal. In this case, the first configuration information may include the sending periodicity of the first reference signal, the sending time of the 1st reference signal in the first reference signal, and the time offset. Based on this, the terminal device may determine a location of the terminal device at the sending time of the 1st reference signal as a location of a 1st antenna in the first virtual antenna array. Optionally, the first reference signal may be a semi-static SRS signal. The network device may send an activation instruction for the semi-static SRS to the terminal device, for example, multimedia access management control entity (medium access control element, MAC-CE) signaling, to activate sending of the first reference signal.

Optionally, the network device may configure an aperiodic first reference signal. In this case, the first configuration information may include the sending time of the 1st reference signal in the first reference signal. Optionally, the first reference signal may be an aperiodic SRS. The network device may send a trigger instruction for the aperiodic SRS to the terminal device, for example, downlink control information (downlink control information, DCI), to trigger sending of the first reference signal.

S303: The terminal device sends the first reference signal to the network device based on the first configuration information. Correspondingly, the network device receives the first reference signal from the terminal device.

In a possible implementation, the terminal device may construct the first virtual antenna array based on the sent first reference signal. Before sending the first reference signal to the network device, the terminal device may determine, based on the motion information of the terminal device and the sending time information of the first antenna, a type of the first virtual antenna array to be constructed, for example, a virtual uniform linear array, a virtual rectangular array, or a virtual circular array. In a process of continuously sending the first reference signal to the network device, the terminal device may determine other parameter information of the first virtual antenna array, for example, a spacing between antennas in the first virtual antenna array and a radius of a circle formed by all antennas, so that the first virtual antenna array can be constructed.

Optionally, the first reference signal may be the periodic reference signal, for example, the periodic SRS. In this case, the terminal device may determine the location of the terminal device at the sending time as the location of the 1st antenna in the first virtual antenna array based on the sending time of the 1st reference signal in the first configuration information. In a motion process, the terminal device may send the first reference signal to the network device based on the sending periodicity of the first reference signal starting from the sending time of the 1st reference signal.

The terminal device may send the first reference signal in the foregoing periodicity, so that the network device can align with motion of the terminal device. For example, assuming that a current motion speed of the terminal device is a kilometers per hour, the network device may calculate a proper sending periodicity of the first reference signal for the terminal device based on the motion speed, so that starting from sending of the 1st reference signal, the terminal device may form one antenna in the first virtual antenna array each time the terminal device sends one first reference signal, and the terminal device may sequentially determine a location of each antenna in the first virtual antenna array based on the sent first reference signal.

Optionally, the first reference signal may be the semi-static reference signal, for example, the semi-static SRS. In this case, the terminal device may determine the location of the terminal device at the sending time as the location of the 1st antenna in the first virtual antenna array based on the sending time of the 1st reference signal in the first configuration information. In a motion process, starting from the sending time of the 1st reference signal, the terminal device may send the first reference signal to the network device when receiving the activation instruction from the network device. Optionally, when receiving a deactivation instruction from the network device, the terminal device may stop sending the first reference signal to the network device.

The terminal device may send the semi-static first reference signal, so that the network device can align with motion of the terminal device. Each time the terminal device moves to a location corresponding to the motion information of the terminal device and the sending time information of the first antenna, the network device may indicate, by sending the activation instruction, the terminal device to send the first reference signal at the location, so that the terminal device constructs the first virtual antenna array in a process of sending the first reference signal.

Optionally, the first reference signal may be the aperiodic reference signal, for example, the aperiodic SRS. In this case, the terminal device may send the first reference signal to the network device based on the sending time of the 1st reference signal in the first configuration information when receiving the trigger instruction from the network device.

The terminal device may send the aperiodic first reference signal, so that the network device can align with motion of the terminal device. Each time the terminal device moves to a location corresponding to the motion information of the terminal device and the sending time information of the first antenna, the network device may indicate, by sending the trigger instruction such as DCI, the terminal device to send the first reference signal at the location, so that the terminal device constructs the first virtual antenna array in a process of sending the first reference signal.

In a possible implementation, the terminal device may construct the first virtual antenna array based on the sent first reference signal. Before sending the first reference signal to the network device, the terminal device may determine, based on the motion information of the terminal device and the sending time information of the first antenna, a type of a virtual antenna array to be constructed, for example, a uniform linear array, a rectangular array, or a circular array. In a process of continuously sending the first reference signal to the network device, the terminal device may determine other parameter information of the virtual antenna array, for example, a spacing between antennas in the virtual antenna array and a radius of a circle formed by all antennas, so that the first virtual antenna array can be constructed.

It can be learned that the terminal device does not need to be configured with a plurality of antennas, and communication quality can be improved by using the first virtual antenna array. For example, a transmission capacity is increased. For example, coherence of the first reference signal may be increased, and an array gain and a diversity gain are obtained. For another example, a co-channel interference signal can be eliminated by analyzing different channel responses of interference.

In a possible implementation, the network device may determine, based on the received first reference signal and the movement trajectory type from the terminal device, the first virtual antenna array constructed by the terminal device. For example, the network device may determine, based on the circular trajectory included in the movement trajectory type and a radius of the first virtual antenna array corresponding to the circular trajectory, that the type of the first virtual antenna array is the virtual uniform circular array; and may determine information such as a quantity of antennas in the first virtual antenna array based on information such as time of the received first reference signal and a sending time interval of each first reference time.

S304: The network device sends a first multipath angle to the terminal device. Correspondingly, the terminal device receives the first multipath angle from the network device. The first multipath angle indicates a multipath angle at which the first reference signal reaches the network device.

A multipath means a propagation phenomenon of a radio signal from a transmit antenna to a receive antenna through a plurality of paths. A direction of arrival (DoA) of the first reference signal that is sent from the first virtual antenna array of the terminal device to a receive antenna of the network device through a plurality of paths may be referred to as the first multipath angle.

In a possible implementation, before sending the first multipath angle to the terminal device, the network device may determine the first multipath angle.

In a possible implementation, the network device may perform channel parameter estimation based on the first virtual antenna array, to determine a steering vector of the first virtual antenna array. The steering vector is an array response of all antennas in an antenna array (for example, the first virtual antenna array) to a narrowband source having unit energy. Because array responses are different in different directions, the steering vector and a direction of the source (for example, the first reference signal) are associated with each other, and uniqueness of the association depends on a geometric structure of the antenna array.

Optionally, when the movement trajectory type of the terminal device is the straight-line trajectory, the type of the first virtual antenna array may be the virtual uniform linear array. For example, as shown in FIG. 5A, an information element $S(t)$ represents the first reference signal; $M$ represents a quantity of antennas in the first virtual antenna array; $d$ represents a spacing between adjacent antennas; and $\theta_k$ represents an incident angle or an emergent angle of a $k^{th}$ multipath in the first virtual antenna array. In this embodiment of this application, $\theta_k$ may represent the emergent angle of the $k^{th}$ multipath formed by sending the first reference signal from the first virtual antenna array. If the first virtual antenna array is the virtual uniform linear array, the network device may obtain the steering vector $a(\theta_{k})$ of the first virtual antenna array through calculation according to the following formulas:

$$a\left(\theta_k\right) = \left[ e^{j\varphi_k^{(1)}}, e^{j\varphi_k^{(2)}}, \ldots, e^{j\varphi_k^{(M-1)}}, e^{j\varphi_k^{(M)}} \right]^T$$

$$\varphi_k^{(i)} = \frac{2\pi f (i-1) d \sin \theta_k}{c}$$

$f$ represents a frequency, and $c$ represents a speed of light.

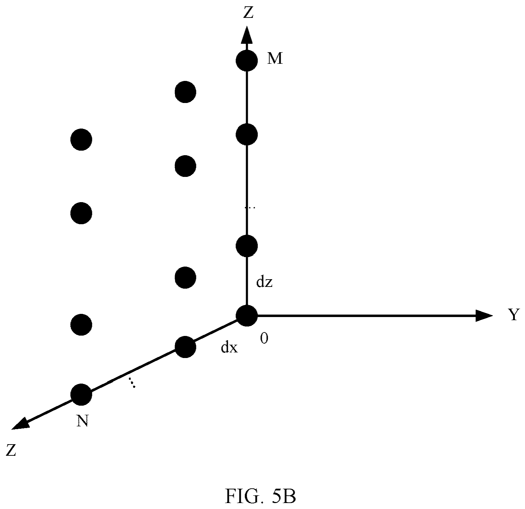

Optionally, when the movement trajectory type of the terminal device is the rectangular trajectory, the type of the first virtual antenna array may be the virtual uniform rectangular array. For example, as shown in FIG. 5B, the virtual uniform rectangular array may include antennas in M rows and N columns. The network device may obtain the steering vector $a(\theta_k)$ of the first virtual antenna array through calculation according to the following formula:

$$a(m,n,\theta,\varphi) = e^{j\left[\left(-\frac{2\pi f}{c}\right)\left((n-1)d_x \sin(\theta) + (m-1)d_y \cos(\varphi)\right)\right]}$$

$$m = 1, \dots, M \quad n = 1, \dots, N$$

$f$ represents a frequency; $c$ represents a speed of light; $M$ and $N$ respectively represent a quantity of rows and a quantity of columns of the first virtual antenna array; $d_x$ represents a horizontal spacing between adjacent antennas in the first virtual antenna array, and $d_y$ represents a vertical spacing between adjacent antennas; and $\theta$ represents a horizontal angle at which a $k$th multipath is incident or emergent, and $\varphi$ represents a vertical angle at which the $k$th multipath is incident or emergent. In this application, $\theta$ may represent an emergent angle of the $k$th multipath.

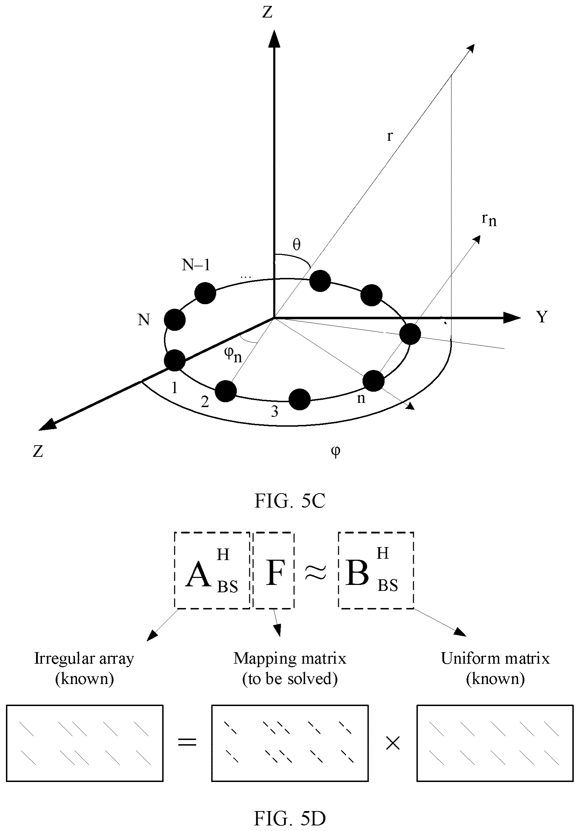

Optionally, when the movement trajectory type of the terminal device is the circular trajectory, the network device may obtain the steering vector of the first virtual antenna array through calculation based on the first virtual antenna array and the radius of the first virtual antenna array. For example, the uniform circular array may be shown in FIG. 5C. The uniform circular array is that N antennas are evenly distributed on a circle with a radius of R on an xoy plane and an origin of a coordinate system is located at a center of the uniform circular array, that is, a center of the circle. r represents a source, that is, the first reference signal; $r_n$ represents an nth multipath formed by the first reference signal sent by an nth antenna in the first virtual antenna array; a direction of arrival $\theta$ is an included angle between a connection line between the source and the origin and the z-axis; $\varphi$ represents an included angle between a projection of the source on the xoy plane and the x-axis; and $\varphi_n$ represents an included angle between a connection line between the nth antenna and the origin and the x-axis. The network device may obtain the steering vector of the first virtual antenna array through calculation according to the following formula:

$$a(m, \theta, \varphi) = e^{\left[ j \left[ \left( -\frac{2\pi f}{c} \right) \left( R \sin(\theta) \cos\left( \varphi - \frac{2\pi(n-1)}{N} \right) \right) \right] \right]}$$

$R$ represents a radius of the first virtual antenna array; $N$ represents a quantity of antennas in the first virtual antenna array; $f$ represents a frequency; and $c$ represents a speed of light.

Optionally, when the movement trajectory type of the terminal device is the irregular trajectory, the type of the first virtual antenna array is a virtual irregular array. The network device may map, through array manifold mapping, an irregular antenna array to an antenna array type that is easy to solve, for example, a rectangular array. For example, as shown in FIG. 5D, a known irregular array $\mathbf{A}_{BS}^{H}$ may be mapped to a mapping matrix $\mathbf{F}$ based on a known uniform matrix $\mathbf{B}_{BS}^{H}$ through array manifold mapping. Array manifold expansion is performed on the mapping matrix, to determine a steering vector of the mapping matrix, that is, the steering vector of the first virtual antenna array. For example, array manifold expansion may be represented as the following formula:

$$\mathbf{a}(\theta, \phi) = \begin{bmatrix} a_1(\theta, \phi) \\ a_2(\theta, \phi) \\ \vdots \\ a_N(\theta, \phi) \end{bmatrix} \approx \begin{bmatrix} \mathbf{G_1} \mathbf{v}(\bar{\theta}, \bar{\phi}) \\ \mathbf{G_2} \mathbf{v}(\bar{\theta}, \bar{\phi}) \\ \vdots \\ \mathbf{G_N} \mathbf{v}(\bar{\theta}, \bar{\phi}) \end{bmatrix} = \begin{bmatrix} \mathbf{G_1} \\ \mathbf{G_2} \\ \vdots \\ \mathbf{G_N} \end{bmatrix} \mathbf{V}(\bar{\theta}, \bar{\phi}) = \mathbf{G} \mathbf{v}(\bar{\theta}, \bar{\phi})$$

A steering vector of an irregular array such as a mapping matrix may be obtained in a mapping manner such as an array difference, array manifold decomposition, wavelength modeling, and beam space transformation. This is not limited in this application.

In a possible implementation, the network device may perform channel estimation based on the first reference signal, to obtain a channel covariance of the first reference signal; and may determine the first multipath angle based on the steering vector of the first virtual antenna array and the channel covariance by using a channel parameter estimation algorithm. For example, the first multipath angle may be estimated based on a multiple signal classification (multiple signal classification, MUSIC) algorithm, an estimation of signal parameters using rotational invariance techniques (estimation of signal parameters using rotational invariance techniques, ESPRIT) algorithm, or a space alternating generalized expectation maximization (space alternating generalized expectation maximization, SAGE) algorithm. For example, if the MUSIC algorithm is used, a main calculation formula is as follows:

$$P_{MUSIC} = \frac{1}{a^H(\theta) \hat{U}_N \hat{U}_N^H a(\theta)}$$

$\hat{U}_N$ represents the channel covariance, $\hat{U}_N^H$ represents transposition of the channel covariance, $a(\theta)$ represents the steering vector, $a^H(\theta)$ represents transposition of the steering vector, and $\theta$ represents the first multipath angle.

In a possible implementation, the terminal device may use the first multipath angle for beam management, for example, for a beam training process in beam management. For example, the terminal device may obtain data such as a beam direction with a maximum power based on the first multipath angle, and may adjust current beamforming, to obtain a larger antenna gain, thereby helping determine a beam pair. Optionally, the terminal device may further use the first multipath angle for a beam recovery process in beam management. For example, the terminal device determines a candidate uplink beam based on the first multipath angle, to select a beam from the candidate uplink beam for beam recovery when a beam fails. Optionally, the terminal device may further perform channel estimation based on the first multipath angle, and performance parameters such as a latency and a received signal-to-noise ratio may be more accurately estimated based on the first multipath angle.

It can be learned from the foregoing descriptions of the beam training process that beam sweeping causes high signal overheads, a high latency, and high power consumption. In addition, in a discontinuous communication scenario, the terminal device intermittently receives network paging. In this case, the terminal device needs to turn on a receiver in advance to complete beam pair link alignment. This manner requires long execution time, and affects user experience. In a scenario in which the terminal device or the network device is in a motion state, time for determining a beam is excessively long. If the time exceeds channel coherence time, a beam pair finally determined through beam training is meaningless.

Beam management is performed based on the first multipath angle. In the scenario in which the terminal device or the network device is in the motion state, the beam pair may be determined, and the candidate uplink beam for beam recovery and the like may be determined, so that a complex beam sweeping operation can be avoided. It can be learned that, in this application, problems such as the high power consumption and the high latency caused by the beam sweeping process can be avoided, thereby reducing power consumption and ensuring communication quality in a mobile scenario.

In a possible implementation, the network device may obtain a third multipath angle based on an antenna array of the network device. The antenna array of the network device may be a real antenna array actually mounted on the network device, or may be a virtual antenna array. Optionally, the first multipath angle and the third multipath angle may form full channel information. The network device may perform channel estimation, channel interference cancellation, iterative weight calculation of a receive beam and a transmit beam, and the like based on the full channel information, to improve communication quality.

In a possible implementation, the network device and the terminal device may communicate with each other by using a plurality of frequency bands in a carrier aggregation (carrier aggregation, CA) manner, and the network device may perform multipath angle estimation in the plurality of frequency bands. For example, it is assumed that the terminal device aggregates two component carriers (component carrier, CC) such as a carrier 1 and a carrier 2 through two antennas, and the network device may perform multipath angle estimation in a plurality of frequency bands based on the two component carriers. For another example, when signal quality of the carrier 1 is poor, the carrier 1 may be optimized based on a multipath angle determined based on the carrier 2, to improve communication quality.

It can be learned that according to the method provided in this embodiment of this application, the terminal device may construct the first virtual antenna array based on the sent first reference signal, and accuracy of multipath angle estimation can be improved based on the first virtual antenna array, so that the terminal device obtains the accurate first multipath angle.

In a possible implementation, the terminal device may be in a static state, and the network device is in a motion state. Based on this, the network device may construct a second virtual antenna array of the network device in a manner of sending a reference signal in a movement process. Based on a same inventive concept, the network device may communicate with the terminal device by using the second virtual antenna array, and may further determine a multipath angle on a network device side based on the second virtual antenna array. The network device may perform channel estimation, uplink beam management, and the like based on the multipath angle on the network device side, for example, adjust a direction of an uplink beam, to improve communication quality and avoid beam sweeping.

It can be learned that the communication method provided in this embodiment of this application may be used in scenarios in which in an FR1 and an FR2, either of two communication parties is in a motion state. In the FR1 scenario, a problem of multipath angle estimation of the terminal device or the network device in the motion state can be resolved, to improve communication quality. In the FR2 scenario, a problem of beam management of the terminal device or the network device in the motion state can be resolved. For example, the terminal device performs beam management based on the first multipath angle.

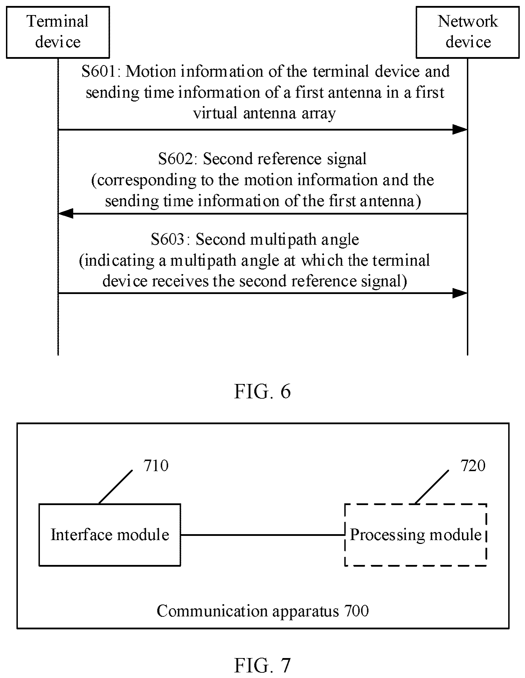

FIG. 6 is a schematic flowchart of another communication method according to an embodiment of this application. As shown in FIG. 6, the communication method includes but is not limited to the following steps.

S601: A terminal device sends motion information of the terminal device and sending time information of a first antenna in a first virtual antenna array of the terminal device to a network device. Correspondingly, the network device receives the motion information and the sending time information of the first antenna from the terminal device.

Based on a same inventive concept, refer to step S301 shown in FIG. 3. Details are not described herein again.

S602: The network device sends a second reference signal to the terminal device. Correspondingly, the terminal device receives the second reference signal from the network device. The second reference signal corresponds to the motion information and the sending time information of the first antenna.

The network device may configure the corresponding second reference signal based on the motion information and the sending time information of the first antenna that are reported by the terminal device. Optionally, second configuration information may be determined. The second configuration information may be used to configure sending time information of the second reference signal.

Optionally, the network device may configure a periodic second reference signal. Optionally, the second configuration information may include a sending periodicity of the second reference signal and sending time of a 1st reference signal in the second reference signal. Based on this, the terminal device may determine a location of the terminal device at the sending time of the 1st reference signal as a location of a 1st antenna in the first virtual antenna array. The 1st antenna is configured to receive the 1st reference signal. Optionally, the second reference signal may be a periodic CSI-RS.

Optionally, the network device may configure a semi-static second reference signal. Optionally, the second configuration information may include a sending periodicity of the second reference signal, sending time of a 1st reference signal in the second reference signal, and a time offset. Based on this, the terminal device may determine a location of the terminal device at the sending time of the 1st reference signal as a location of a 1st antenna in the first virtual antenna array. Optionally, the second reference signal may be a semi-static CSI-RS signal. The network device may generate an activation instruction for the semi-static CSI-RS, for example, MAC-CE signaling, and when the activation instruction is obtained, send the second reference signal to the terminal device. Optionally, the network device may further generate a deactivation instruction for the semi-static CSI-RS. When the deactivation instruction is obtained, the network device may stop sending the second reference signal to the terminal device.

Optionally, the network device may configure an aperiodic second reference signal. In this case, the second configuration information may include sending time of a 1st reference signal in the first reference signal. Optionally, the first reference signal may be an aperiodic CSI-RS. The network device may generate a trigger instruction for the aperiodic CSI-RS, for example, DCI, to trigger sending of the second reference signal.

In a possible implementation, the network device may determine, based on a movement trajectory type from the terminal device, the first virtual antenna array constructed by the terminal device. For example, the network device may determine, based on a circular trajectory included in the movement trajectory type and a radius of the first virtual antenna array corresponding to the circular trajectory, that a type of the first virtual antenna array is a virtual uniform circular array; and may determine information such as a quantity of antennas in the first virtual antenna array based on information such as time of a received first reference signal and a sending time interval of each first reference time.

S603: The terminal device sends a second multipath angle to the network device. Correspondingly, the network device receives the second multipath angle from the terminal device. The second multipath angle indicates a multipath angle at which the second reference signal is received.

A multipath means a propagation phenomenon of a radio signal from a transmit antenna to a receive antenna through a plurality of paths. A direction of arrival of the second reference signal that is sent from the network device to the first virtual antenna array of the terminal device through a plurality of paths may be referred to as the second multipath angle.

In a possible implementation, before the terminal device sends the second multipath angle to the network device, the terminal device may determine the second multipath angle based on the first virtual antenna array.

Optionally, the terminal device may perform channel parameter estimation based on the first virtual antenna array, to determine a steering vector of the first virtual antenna array.

Optionally, the first virtual antenna array may be a virtual uniform linear array, a virtual uniform rectangular array, a virtual uniform circular array, or a virtual irregular array. Based on a same inventive concept, for a specific implementation in which the terminal device determines the steering vector of the first virtual antenna array based on the first virtual antenna array, refer to step S304 in FIG. 3. Details are not described herein again.

In a possible implementation, the terminal device may use the second multipath angle for beam management, for example, for a beam training process in beam management. For example, the terminal device may obtain data such as a beam direction with a maximum power based on the second multipath angle, and may adjust current beamforming, to obtain a larger antenna gain, thereby helping determine a beam pair. Optionally, the terminal device may further use the second multipath angle for a beam recovery process in beam management. For example, the terminal device determines a candidate uplink beam based on the second multipath angle, to select a beam from the candidate uplink beam for beam recovery when a beam fails. Optionally, the terminal device may further perform channel estimation based on the second multipath angle, and performance parameters such as a latency and a received signal-to-noise ratio may be more accurately estimated based on the second multipath angle.

It can be learned that beam management is performed based on a first multipath angle, so that a complex beam sweeping operation can be avoided, to avoid problems such as high power consumption and a high latency caused by a beam sweeping process, thereby reducing power consumption and improving communication quality.

In a possible implementation, the network device may obtain a third multipath angle based on an antenna array of the network device. The antenna array of the network device may be a real antenna array actually mounted on the network device, or may be a virtual antenna array. Optionally, the second multipath angle and the third multipath angle may form full channel information. The network device may perform channel estimation, channel interference cancellation, iterative weight calculation of a receive beam and a transmit beam, and the like based on the full channel information, to improve communication quality.

In a possible implementation, the network device and the terminal device may communicate with each other by using a plurality of frequency bands in a carrier aggregation manner, and the network device may perform multipath angle estimation in the plurality of frequency bands. For example, it is assumed that the terminal device aggregates two component carriers such as a carrier 1 and a carrier 2 through two antennas, and the network device may perform multipath angle estimation in a plurality of frequency bands based on the two component carriers. For another example, when signal quality of the carrier 1 is poor, the carrier 1 may be optimized based on a multipath angle determined based on the carrier 2, to improve communication quality.

It can be learned that according to the method provided in this embodiment of this application, the terminal device may construct the first virtual antenna array, and report the motion information and the sending time information of the first antenna to the network device, so that the network device sends the second reference signal. The second reference signal corresponds to the motion information of the terminal device and the sending time information of the first antenna, so that the second multipath angle with high accuracy is determined based on the second reference signal, thereby improving communication quality.

This application provides a communication apparatus, which may be configured to implement a function of the foregoing terminal device or network device. The communication apparatus may be the terminal device or the network device. The communication apparatus includes modules or units that are in one-to-one correspondence with the methods/operations/steps/actions performed by the terminal device or the network device in the foregoing method embodiments. The unit may be implemented by a hardware circuit, software, or a combination of a hardware circuit and software. FIG. 7 is a diagram of a structure of a communication apparatus 700 according to an embodiment of this application. The communication apparatus 700 may include an interface module 710. The interface module 710 is configured to receive data and send data. Optionally, the communication apparatus further includes a processing module 720. Specifically, the processing module 720 is configured to process signaling and/or data. The signaling and/or data may be data received by the interface module 710, and the processed signaling and/or data may also be sent by the interface module 710.

In an implementation, when the communication apparatus 700 is the terminal device,

in a possible implementation, the interface module 710 is configured to: send motion information of the terminal device and sending time information of a first antenna in a first virtual antenna array to a network device, where the first antenna is any antenna in the first virtual antenna array; receive first configuration information from the network device, where the first configuration information is used to configure a first reference signal corresponding to the motion information and the sending time information; send the first reference signal to the network device based on the first configuration information; and receive a first multipath angle from the network device, where the first multipath angle indicates a multipath angle at which the first reference signal reaches the network device.

Optionally, the first configuration information is used to configure sending time information of the first reference signal.

Optionally, the sending time information of the first reference signal includes sending time of a 1st reference signal in the first reference signal and a sending periodicity of the first reference signal. Based on this, the interface module 710 is further configured to: determine a location of a 1st antenna in the first virtual antenna array based on the sending time of the 1st reference signal, where the 1st antenna is configured to send the 1st reference signal; and send the first reference signal to the network device based on the location of the 1st antenna, the motion information, the sending time of the 1st reference signal, and the sending periodicity.

Optionally, the sending time information of the first reference signal includes sending time of a 1st reference signal in the first reference signal, a sending periodicity of the first reference signal, and a time offset. The processing module 720 is configured to determine a location of a 1st antenna in the first virtual antenna array based on the sending time of the 1st reference signal. The interface module 710 is further configured to: when receiving an activation instruction from the network device, send the first reference signal to the network device based on the location of the 1st antenna, the motion information, the sending time of the 1st reference signal, the sending periodicity, and the time offset.

Optionally, the sending time information of the first reference signal may include sending time of a 1st reference signal in the first reference signal. The processing module 720 is further configured to determine a location of each antenna in the first virtual antenna array based on the sending time of the 1st reference signal. The interface module 710 is further configured to: when receiving a trigger instruction from the network device, send the first reference signal to the network device based on the sending time of the 1st reference signal and the location of each antenna in the first virtual antenna array.

Optionally, the processing module 720 is further configured to construct the first virtual antenna array based on the sent first reference signal.

Optionally, the interface module 710 is further configured to send parameter information of the first virtual antenna array and a movement trajectory type corresponding to the first virtual antenna array to the network device. The movement trajectory type includes one or more of a circular trajectory, a rectangular trajectory, a straight-line trajectory, and an irregular trajectory.

Optionally, if the movement trajectory type includes the circular trajectory, the parameter information of the first virtual antenna array includes a radius of a circle formed by antennas in the first virtual antenna array; or if the movement trajectory type includes the rectangular trajectory, the straight-line trajectory, or the irregular trajectory, the parameter information includes a spacing between antennas in the first virtual antenna array.

Optionally, the motion information includes one or more of a rotation speed, a translation speed, acceleration information, and motion sensor information of the terminal device.

Optionally, the processing module 720 is further configured to perform beam management and/or channel estimation based on the first multipath angle.

For specific implementations of the interface module 710 and the processing module 720, refer to specific implementation steps of the terminal device in FIG. 3. Details are not described herein again.

In another possible implementation, the interface module 710 is configured to: send motion information of the terminal device and sending time information of a first antenna in a first virtual antenna array of the terminal device to a network device; receive a second reference signal from the network device, where the second reference signal corresponds to the motion information and the sending time information of the first antenna; and send a second multipath angle to the network device, where the second multipath angle indicates a multipath angle at which the second reference signal is received. The first antenna is any antenna in the first virtual antenna array.

Optionally, the interface module 710 is further configured to send parameter information of the first virtual antenna array and a movement trajectory type corresponding to the first virtual antenna array to the network device. The movement trajectory type includes one or more of a circular trajectory, a rectangular trajectory, a straight-line trajectory, and an irregular trajectory.

Optionally, if the movement trajectory type includes the circular trajectory, the parameter information of the first virtual antenna array includes a radius of a circle formed by antennas in the first virtual antenna array; or if the movement trajectory type includes the rectangular trajectory, the straight-line trajectory, or the irregular trajectory, the parameter information includes a spacing between antennas in the first virtual antenna array.

Optionally, the processing module 720 is configured to: determine a steering vector of the first virtual antenna array based on the first virtual antenna array and the parameter information of the first virtual antenna array; perform channel estimation based on the second reference signal, to determine a channel covariance parameter; and determine the second multipath angle based on the channel covariance parameter and the steering vector of the first virtual antenna array.

Optionally, the processing module 720 is further configured to perform beam management and/or channel estimation based on the second multipath angle.

For specific implementations of the interface module 710 and the processing module 720, refer to specific implementation steps of the terminal device in FIG. 6. Details are not described herein again.

In another implementation, when the communication apparatus shown in FIG. 7 is the network device, in a possible implementation, the interface module 710 is configured to: receive motion information of a terminal device and sending time information of a first antenna in a first virtual antenna array of the terminal device from the terminal device; send first configuration information to the terminal device, where the first configuration information is used to configure a first reference signal corresponding to the motion information and the sending time information of the first antenna; receive the first reference signal from the terminal device; and send a first multipath angle to the terminal device, where the first multipath angle indicates a multipath angle at which the first reference signal is received. The first antenna is any antenna in the first virtual antenna array.

Optionally, the interface module 710 is further configured to receive parameter information of the first virtual antenna array and a movement trajectory type corresponding to the first virtual antenna array from the terminal device. The processing module 720 is configured to determine the first virtual antenna array based on the movement trajectory type, the parameter information of the first virtual antenna array, and the first reference signal, where the movement trajectory type includes one or more of a circular trajectory, a rectangular trajectory, a straight-line trajectory, and an irregular trajectory.

Optionally, if the movement trajectory type includes the circular trajectory, the parameter information of the first virtual antenna array may include a radius of a circle formed by all antennas in the first virtual antenna array; or if the movement trajectory type includes the rectangular trajectory, the straight-line trajectory, or the irregular trajectory, the parameter information of the first virtual antenna array may include a spacing between antennas in the first virtual antenna array.

Optionally, the processing module 720 is further configured to: determine a steering vector of the first virtual antenna array based on the first virtual antenna array and the parameter information of the first virtual antenna array; perform channel estimation based on the first reference signal, to determine a channel covariance parameter; and determine the first multipath angle based on the channel covariance parameter and the steering vector of the first virtual antenna array.

For specific implementations of the interface module 710 and the processing module 720, refer to specific implementation steps of the network device in FIG. 3. Details are not described herein again.

In another possible implementation, the interface module 710 is configured to: receive motion information of a terminal device and sending time information of a first antenna in a first virtual antenna array of the terminal device from the terminal device; send a second reference signal to the terminal device, where the second reference signal is determined based on the motion information and the sending time information of the first antenna; and receive a second multipath angle from the terminal device, where the second multipath angle indicates a multipath angle at which the second reference signal reaches the terminal device. The first antenna is any antenna in the first virtual antenna array.

Optionally, the interface module 710 is further configured to receive parameter information of the first virtual antenna array and a movement trajectory type corresponding to the first virtual antenna array from the terminal device. The processing module 720 is configured to determine the first virtual antenna array based on the movement trajectory type, the parameter information of the first virtual antenna array, and the first reference signal, where the movement trajectory type includes one or more of a circular trajectory, a rectangular trajectory, a straight-line trajectory, and an irregular trajectory.

Optionally, if the movement trajectory type includes the circular trajectory, the parameter information of the first virtual antenna array includes a radius of a circle formed by all antennas in the first virtual antenna array; or if the movement trajectory type includes the rectangular trajectory, the straight-line trajectory, or the irregular trajectory, the parameter information of the first virtual antenna array includes a spacing between antennas in the first virtual antenna array.

Optionally, the processing module 720 is further configured to determine sending time information of the second reference signal based on the motion information, the sending time information of the first antenna, and the first virtual antenna array.

Optionally, the sending time information of the second reference signal includes sending time of a 1st reference signal in the second reference signal and a sending periodicity of the second reference signal. Based on this, the interface module 710 is further configured to send the second reference signal to the terminal device based on the sending time of the 1st reference signal and the sending periodicity.

Optionally, the sending time information of the second reference signal includes sending time of a 1st reference signal in the second reference signal, a sending periodicity of the second reference signal, and a time offset. Based on this, the processing module 720 is further configured to determine an activation instruction of the second reference signal based on the sending time of the 1st reference signal, the sending periodicity, and the time offset. The interface module 710 is further configured to: when the activation instruction is obtained, send the second reference signal to the terminal device.

Optionally, the sending time information of the second reference signal includes sending time of a 1st reference signal in the second reference signal. Based on this, the processing module 720 is further configured to determine a trigger instruction of the second reference signal based on the motion information, the sending time information of the first antenna, the first virtual antenna array, and the sending time of the 1st reference signal. The interface module 710 is further configured to: when the trigger instruction is obtained, send the second reference signal to the terminal device.

For specific implementations of the interface module 710 and the processing module 720, refer to specific implementation steps of the network device in FIG. 6. Details are not described herein again.

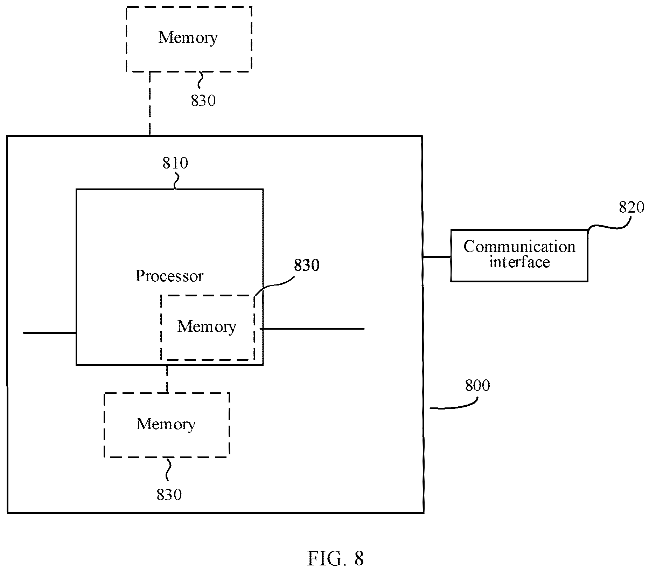

FIG. 8 shows a communication apparatus 800 according to an embodiment of this application. The communication apparatus 800 is configured to implement functions of the foregoing terminal device or network device. The apparatus may be a communication device or an apparatus used in the communication device, and the communication device may be the terminal device or the network device. The apparatus used in the communication device may be a chip system or a chip in the communication device. The chip system may include a chip, or may include a chip and another discrete component.

The communication apparatus 800 includes at least one processor 810, configured to implement a processing function of a device (for example, the network device or the terminal device) in the methods provided in embodiments of this application. The communication apparatus 800 may further include a communication interface 820, configured to implement receiving and sending operations of the device (for example, the network device or the terminal device) in the methods provided in embodiments of this application. In this embodiment of this application, the communication interface may be a transceiver, a circuit, a bus, a module, or another type of communication interface, and is configured to communicate with another device through a transmission medium. For example, the communication interface 820 is used by an apparatus in the communication apparatus 800 to communicate with another device. The processor 810 receives and sends data through the communication interface 820, and is configured to implement the methods in the foregoing method embodiments.

The communication apparatus 800 may further include at least one memory 830, configured to store program instructions and/or data. The memory 830 is coupled to the processor 810. The coupling in this embodiment of this application may be an indirect coupling or a communication connection between apparatuses, units, or modules in an electrical form, a mechanical form, or another form, and is used for information exchange between the apparatuses, the units, or the modules. The processor 810 may cooperate with the memory 830. The processor 810 may execute the program instructions stored in the memory 830. At least one of the at least one memory may be included in the processor.

A specific connection medium between the communication interface 820, the processor 810, and the memory 830 is not limited in this embodiment of this application. In this embodiment of this application, in FIG. 8, the memory 830, the processor 810, and the communication interface 820 are connected through a bus. The bus is represented by using a thick line in FIG. 8. A manner of a connection between other components is merely an example for description, and is not limited thereto. The bus may be classified into an address bus, a data bus, a control bus, and the like. For ease of representation, only one thick line is for representing the bus in FIG. 8, but this does not mean that there is only one bus or only one type of bus.

When the communication apparatus 800 is specifically the apparatus used in the device (for example, the network device or the terminal device), for example, when the communication apparatus 800 is specifically the chip or the chip system, the communication interface 820 may output or receive a baseband signal. When the communication apparatus 800 is specifically the device (for example, the network device or the terminal device), the communication interface 820 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

It should be noted that the communication interface 820 may be configured to perform a function of the interface module 710, and the processor 810 may be configured to perform a function of the processing module 720. Details are not described herein again.

When the communication apparatus is a chip used in a terminal, the chip in the terminal implements functions of the terminal device in the foregoing method embodiments, and the chip in the terminal receives information from another network element; or the chip in the terminal sends information to another network element.

When the communication apparatus is a chip used in a network device, the chip in the network device implements functions of the network device in the foregoing method embodiments. The chip in the network device receives information from another network element; or the chip in the network device sends information to another network element.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any conventional processor, or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may exist in the terminal device or the network device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or instructions are loaded and executed on a computer, all or some of the procedures or functions described in embodiments of this application are performed. The computer may be a general purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible to the computer, or a data storage device, for example, a server, integrating one or more usable media. The usable medium may be a magnetic medium, for example, a floppy disk, a hard disk, or a magnetic tape; may be an optical medium, for example, a DVD; or may be a semiconductor medium, for example, a solid state disk (solid state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions. When the computer-executable instructions are executed, the method performed by the terminal device or the network device in the foregoing method embodiments is implemented.

An embodiment of this application further provides a computer program product. The computer program product includes a computer program. When the computer program is executed, the method performed by the terminal device or the network device in the foregoing method embodiments is implemented.

An embodiment of this application further provides a communication system. The communication system includes a terminal device or a network device. The terminal device is configured to perform the method performed by the terminal device in the foregoing method embodiments. The network device is configured to perform the method performed by the network device in the foregoing method embodiments.

In the foregoing embodiments, the descriptions of each embodiment have respective focuses. For a part that is not described in detail in an embodiment, refer to related descriptions in other embodiments. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by persons skilled in the art that embodiments described in this specification all belong to preferable embodiments, and the related actions and modules are not necessarily required by this application.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1.   A communication method, comprising:

sending motion information of a terminal device and sending time information of a first antenna in a first virtual antenna array to a network device, wherein the first antenna is any antenna in the first virtual antenna array; receiving first configuration information from the network device, wherein the first configuration information is used to configure a first reference signal corresponding to the motion information and the sending time information; and sending the first reference signal to the network device based on the first configuration information; and receiving a first multipath angle from the network device, wherein the first multipath angle indicates a multipath angle at which the first reference signal reaches the network device.

2.   The method according to claim 1, wherein the first configuration information is used to configure sending time information of the first reference signal.

3.   The method according to claim 2, wherein the sending time information of the first reference signal comprises sending

time of a 1st reference signal in the first reference signal and a sending periodicity of the first reference signal; and sending the first reference signal to the network device based on the first configuration information comprises:

> determining a location of a 1st antenna in the first virtual antenna array based on the sending time of the 1st reference signal, wherein the 1st antenna is configured to send the 1st reference signal; and
> sending the first reference signal to the network device based on the location of the 1st antenna, the motion information, the sending time of the 1st reference signal, and the sending periodicity.

4. The method according to claim 2, wherein the sending time information of the first reference signal comprises sending time of a 1st reference signal in the first reference signal, a sending periodicity of the first reference signal, and a time offset; and
sending the first reference signal to the network device based on the first configuration information comprises:

> determining a location of a 1st antenna in the first virtual antenna array based on the sending time of the 1st reference signal; and
> when receiving an activation instruction from the network device, sending the first reference signal to the network device based on the location of the 1st antenna, the motion information, the sending time of the 1st reference signal, the sending periodicity, and the time offset.

5. The method according to claim 2, wherein the sending time information of the first reference signal comprises sending time of a 1st reference signal in the first reference signal; and
sending the first reference signal to the network device based on the first configuration information comprises:

> determining a location of each antenna in the first virtual antenna array based on the sending time of the 1st reference signal; and
> when receiving a trigger instruction from the network device, sending the first reference signal to the network device based on the sending time of the 1st reference signal and the location of each antenna in the first virtual antenna array.

6. The method according to any one of claims 2 to 5, wherein the method further comprises:
constructing the first virtual antenna array based on the sent first reference signal.

7. The method according to claim 1, wherein the method further comprises:
sending parameter information of the first virtual antenna array and a movement trajectory type corresponding to the first virtual antenna array to the network device, wherein the movement trajectory type comprises one or more of a circular trajectory, a rectangular trajectory, a straight-line trajectory, and an irregular trajectory.

8. The method according to claim 7, wherein if the movement trajectory type comprises the circular trajectory, the parameter information of the first virtual antenna array comprises a radius of a circle formed by antennas in the first virtual antenna array; or if the movement trajectory type comprises the rectangular trajectory, the straight-line trajectory, or the irregular trajectory, the parameter information comprises a spacing between antennas in the first virtual antenna array.

9. The method according to claim 1, wherein the motion information comprises one or more of a rotation speed, a translation speed, acceleration information, and motion sensor information of the terminal device.

10. The method according to any one of claims 1 to 9, wherein the method further comprises:
performing beam management and/or channel estimation based on the first multipath angle.

11. A communication method, wherein the method comprises:

> receiving motion information of a terminal device and sending time information of a first antenna in a first virtual antenna array of the terminal device from the terminal device, wherein the first antenna is any antenna in the first virtual antenna array;
> sending first configuration information to the terminal device, wherein the first configuration information is used to configure a first reference signal corresponding to the motion information and the sending time information of the first antenna;
> receiving the first reference signal from the terminal device; and

sending a first multipath angle to the terminal device, wherein the first multipath angle indicates a multipath angle at which the first reference signal is received.

12. The method according to claim 11, wherein the method further comprises:

receiving parameter information of the first virtual antenna array and a movement trajectory type corresponding to the first virtual antenna array from the terminal device; and
determining the first virtual antenna array based on the movement trajectory type, the parameter information of the first virtual antenna array, and the first reference signal, wherein
the movement trajectory type comprises one or more of a circular trajectory, a rectangular trajectory, a straight-line trajectory, and an irregular trajectory.

13. The method according to claim 12, wherein if the movement trajectory type comprises the circular trajectory, the parameter information of the first virtual antenna array comprises a radius of a circle formed by all antennas in the first virtual antenna array; or if the movement trajectory type comprises the rectangular trajectory, the straight-line trajectory, or the irregular trajectory, the parameter information of the first virtual antenna array comprises a spacing between antennas in the first virtual antenna array.

14. The method according to claim 13, wherein the method further comprises:

determining a steering vector of the first virtual antenna array based on the first virtual antenna array and the parameter information of the first virtual antenna array;
performing channel estimation based on the first reference signal, to determine a channel covariance parameter; and
determining the first multipath angle based on the channel covariance parameter and the steering vector of the first virtual antenna array.

15. A communication method, wherein the method comprises:

sending motion information of a terminal device and sending time information of a first antenna in a first virtual antenna array of the terminal device to a network device, wherein the first antenna is any antenna in the first virtual antenna array;
receiving a second reference signal from the network device, wherein the second reference signal corresponds to the motion information and the sending time information of the first antenna; and
sending a second multipath angle to the network device, wherein the second multipath angle indicates a multipath angle at which the second reference signal is received.

16. The method according to claim 15, wherein the method further comprises:
sending parameter information of the first virtual antenna array and a movement trajectory type corresponding to the first virtual antenna array to the network device, wherein the movement trajectory type comprises one or more of a circular trajectory, a rectangular trajectory, a straight-line trajectory, and an irregular trajectory.

17. The method according to claim 16, wherein if the movement trajectory type comprises the circular trajectory, the parameter information of the first virtual antenna array comprises a radius of a circle formed by all antennas in the first virtual antenna array; or if the movement trajectory type comprises the rectangular trajectory, the straight-line trajectory, or the irregular trajectory, the parameter information of the first virtual antenna array comprises a spacing between antennas in the first virtual antenna array.

18. The method according to claim 17, wherein the method further comprises:

determining a steering vector of the first virtual antenna array based on the first virtual antenna array and the parameter information of the first virtual antenna array;
performing channel estimation based on the second reference signal, to determine a channel covariance parameter; and
determining the second multipath angle based on the channel covariance parameter and the steering vector of the first virtual antenna array.

19. The method according to any one of claims 15 to 18, wherein the method further comprises:

performing beam management and/or channel estimation based on the second multipath angle.

20. A communication method, wherein the method comprises:

receiving motion information of a terminal device and sending time information of a first antenna in a first virtual antenna array of the terminal device from the terminal device, wherein the first antenna is any antenna in the first virtual antenna array;

sending a second reference signal to the terminal device, wherein the second reference signal is determined based on the motion information and the sending time information of the first antenna; and

receiving a second multipath angle from the terminal device, wherein the second multipath angle indicates a multipath angle at which the second reference signal reaches the terminal device.

21. The method according to claim 20, wherein the method further comprises:

receiving parameter information of the first virtual antenna array and a movement trajectory type corresponding to the first virtual antenna array from the terminal device; and

determining the first virtual antenna array based on the movement trajectory type and the parameter information, wherein

the movement trajectory type comprises one or more of a circular trajectory, a rectangular trajectory, a straight-line trajectory, and an irregular trajectory.

22. The method according to claim 21, wherein if the movement trajectory type comprises the circular trajectory, the parameter information of the first virtual antenna array comprises a radius of a circle formed by all antennas in the first virtual antenna array; or if the movement trajectory type comprises the rectangular trajectory, the straight-line trajectory, or the irregular trajectory, the parameter information of the first virtual antenna array comprises a spacing between antennas in the first virtual antenna array.

23. The method according to claim 22, wherein the method further comprises:
determining sending time information of the second reference signal based on the motion information, the sending time information of the first antenna, and the first virtual antenna array.

24. The method according to claim 23, wherein the sending time information of the second reference signal comprises sending time of a 1st reference signal in the second reference signal and a sending periodicity of the second reference signal; and
sending the second reference signal to the terminal device comprises:
sending the second reference signal to the terminal device based on the sending time of the 1st reference signal and the sending periodicity.

25. The method according to claim 23, wherein the sending time information of the second reference signal comprises sending time of a 1st reference signal in the second reference signal, a sending periodicity of the second reference signal, and a time offset; and
sending the second reference signal to the terminal device comprises:

determining an activation instruction of the second reference signal based on the sending time of the 1st reference signal, the sending periodicity, and the time offset; and
when the activation instruction is obtained, sending the second reference signal to the terminal device.

26. The method according to claim 23, wherein the sending time information of the second reference signal comprises sending time of a 1st reference signal in the second reference signal; and
sending the second reference signal to the terminal device comprises:

determining a trigger instruction of the second reference signal based on the motion information, the sending time information of the first antenna, the first virtual antenna array, and the sending time of the 1st reference signal; and
when the trigger instruction is obtained, sending the second reference signal to the terminal device.

27. A communication apparatus, wherein the communication apparatus comprises a transceiver module and a processing module, and the transceiver module and the processing module are used by the communication apparatus to implement the method according to any one of claims 1 to 10, implement the method according to any one of claims 11

**EP 4 675 935 A1**

to 14, implement the method according to any one of claims 15 to 19, or implement the method according to any one of claims 20 to 26.

28. A communication apparatus, comprising a processor, wherein the processor is coupled to a memory, the memory is configured to store a program or instructions, and when the program or the instructions are executed by the processor, the communication apparatus is enabled to perform the method according to any one of claims 1 to 10, the method according to any one of claims 11 to 14, the method according to any one of claims 15 to 19, or the method according to any one of claims 20 to 26.

29. A computer-readable storage medium, wherein the computer storage medium stores a computer program or instructions, and when the computer program or the instructions are executed, the method according to any one of claims 1 to 10, the method according to any one of claims 11 to 14, the method according to any one of claims 15 to 19, or the method according to any one of claims 20 to 26 is implemented.

30. A computer program product, comprising a computer program or instructions, wherein when the computer program or the instructions are executed, a computer is enabled to perform the method according to any one of claims 1 to 10, the method according to any one of claims 11 to 14, the method according to any one of claims 15 to 19, or the method according to any one of claims 20 to 26.

Communication system 1000

FIG. 1

**P-1 process**     **P-2 process**     **P-3 process**

FIG. 2

| Terminal device | | Network device |
| --- | --- | --- |

S301: Motion information of the terminal device and sending time information of a first antenna in a first virtual antenna array

S302: First configuration information (used to configure a first reference signal corresponding to the motion information and the sending time information of the first antenna)

S303: First reference signal

S304: First multipath angle (indicating a multipath angle at which the first reference signal reaches the network device)

FIG. 3

(a) Virtual uniform
linear array

(b) Virtual uniform
rectangular array

(c) Virtual uniform linear array
on a high-speed train

(d) Virtual uniform
circular array

FIG. 4

FIG. 5A

FIG. 5B

FIG. 5C

$$A_{BS}^{H} \; F \approx B_{BS}^{H}$$

Irregular array
(known)

Mapping matrix
(to be solved)

Uniform matrix
(known)

FIG. 5D

| Terminal device | | Network device |
|---|---|---|

S601: Motion information of the terminal device and sending time information of a first antenna in a first virtual antenna array

S602: Second reference signal (corresponding to the motion information and the sending time information of the first antenna)

S603: Second multipath angle (indicating a multipath angle at which the terminal device receives the second reference signal)

FIG. 6

710

720

Interface module — Processing module

Communication apparatus 700

FIG. 7

FIG. 8

## INTERNATIONAL SEARCH REPORT

| International application No. |
| --- |
| **PCT/CN2024/082482** |

| A. | CLASSIFICATION OF SUBJECT MATTER |
| --- | --- |

H04B7/0413(2017.01)i; H04W16/28(2009.01)i

According to International Patent Classification (IPC) or to both national classification and IPC

| B. | FIELDS SEARCHED |
| --- | --- |

Minimum documentation searched (classification system followed by classification symbols)

IPC:H04B,H04W,H04L

Documentation searched other than minimum documentation to the extent that such documents are included in the fields searched

Electronic data base consulted during the international search (name of data base and, where practicable, search terms used)

3GPP, CNTXT, DWPI, ENTXTC, IEEE: 参考信号, 多径, 天线, 虚拟, 阵列, 轨迹, 角度, 路径, 路线, 上报, 上行, 位置, 下行, multipath, reference signal, angle, arrival, SRS, PRS, mov+, position, location, virtual, antenna, array

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2021259180 A1 (HUAWEI TECHNOLOGIES CO., LTD.) 30 December 2021 (2021-12-30) description, page 13, line 10 to page 14, line 25 | 1-30 |
| Y | WO 2022082151 A1 (QUALCOMM INCORPORATED) 21 April 2022 (2022-04-21) claims 1-3, and description, paragraphs [0109]-[0112] and [0134] | 1-30 |
| A | US 2001033248 A1 (OWECHKO, Yuri) 25 October 2001 (2001-10-25) entire document | 1-30 |
| A | CN 106464332 A (TELEFONAKTIEBOLAGET LM ERICSSON (PUBL)) 22 February 2017 (2017-02-22) entire document | 1-30 |
| A | SAMSUNG. "Discussion on NR Carrier Phase Positioning Measurements" *3GPP TSG RAN WG1 #109-e, R1-2203913*, 20 May 2022 (2022-05-20), entire document | 1-30 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 June 2024** | **19 June 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/082482**

| Patent document cited in search report | | | Publication date (day/month/year) | Patent family member(s) | | | Publication date (day/month/year) |
|---|---|---|---|---|---|---|---|
| WO | 2021259180 | A1 | 30 December 2021 | US | 2023122302 | A1 | 20 April 2023 |
| | | | | EP | 4167629 | A1 | 19 April 2023 |
| | | | | CN | 113840324 | A | 24 December 2021 |
| WO | 2022082151 | A1 | 21 April 2022 | EP | 4226519 | A1 | 16 August 2023 |
| | | | | BR | 112023006212 | A2 | 09 May 2023 |
| | | | | US | 2023336229 | A1 | 19 October 2023 |
| | | | | JP | 2023546372 | A | 02 November 2023 |
| | | | | KR | 20230086671 | A | 15 June 2023 |
| | | | | CN | 116349149 | A | 27 June 2023 |
| | | | | IN | 202347014503 | A | 31 March 2023 |
| | | | | VN | 96639 | A | 25 July 2023 |
| US | 2001033248 | A1 | 25 October 2001 | EP | 1260035 | A2 | 27 November 2002 |
| | | | | JP | 2003526238 | A | 02 September 2003 |
| | | | | AU | 4342401 | A | 12 September 2001 |
| | | | | WO | 0165637 | A2 | 07 September 2001 |
| CN | 106464332 | A | 22 February 2017 | WO | 2015169369 | A1 | 12 November 2015 |
| | | | | EP | 3140921 | A1 | 15 March 2017 |
| | | | | US | 2017117947 | A1 | 27 April 2017 |
| | | | | US | 2015326297 | A1 | 12 November 2015 |
| | | | | KR | 20170007777 | A | 20 January 2017 |
| | | | | MX | 2016014036 | A | 14 February 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310311468